# EUROPEAN PATENT SPECIFICATION

(11) **EP 3 433 112 B1**
(45) Date of publication and mention of the grant of the patent: **05.08.2020**
(21) Application number: 17722865.7
(22) Date of filing: 24.03.2017
(51) Int. Cl.: B60C 19/00, C08L 7/00, C08L 9/06

(54) **SOUNDPROOF SELF-SEALING TYRE FOR VEHICLE WHEELS**
SCHALLDICHTER SELBSTDICHTENDER REIFEN FÜR FAHRZEUGRÄDER
PNEU AUTO-OBTURANT INSONORISÉ POUR ROUES DE VÉHICULE

(30) Priority: 25.03.2016 IT UA20162026
(43) Date of publication of application: 30.01.2019
(73) Proprietor: Pirelli Tyre S.p.A., 20126 Milano (IT)
(72) Inventor: GIANNINI, Luca, 20126 Milano (IT); CARACINO, Paola, 20126 Milano (IT); SCOTTI, Andrea, 20126 Milano (IT)
(74) Representative: PGA S.p.A.
(86) International application number: PCT/IB2017/051713
(87) International publication number: WO 2017/163219

(56) References cited:
- WO-A1-2015/149959
- US-A1- 2008 264 539
- US-A1- 2013 087 267

## Description

The present invention relates to a soundproof seal-sealing tyre for vehicle wheels. More particularly, the invention relates to a self-sealing tyre, i.e. a tyre able to delay or prevent the escape of air and the consequent deflation due to a puncture caused by a sharp object such as a nail. Moreover, the tyre is also soundproof, i.e. able to reduce the noise perceived in the passenger compartment of vehicles, due to the attenuation of the cavity noise of the tyre itself.

### PRIOR ART

A self-sealing tyre is a tyre comprising in its interior at least one layer of sealing elastomeric composition which can adhere to the sharp object that punctures the tyre. The sealing elastomeric composition is made so as to be dragged inside the hole when the sharp object is ejected or removed, thereby sealing the hole itself and preventing air escape from the tyre.

In the process of manufacturing a self-sealing tyre, the sealing elastomeric composition can be deposited on the radially innermost wall - generally on the liner - of the tyre already vulcanised, or it can be applied during assembly of the green tyre and vulcanised together with the other components. In the second case, the sealing elastomeric composition layer is said to be integrated into (built-in) the tyre.

In order to allow easier handling and transport of the sealing elastomeric composition and improve the final sealing performance thereof, protective and supporting films are often used, on which the sealing elastomeric composition is deposited in a uniform layer.

Such films, when arranged as radially innermost layer in the green tyre, facilitate the manufacture of the tyre, preventing any undesired contact of the sealing elastomeric composition with the operator, with the handling and assembly equipment and with the other components of the tyre. Moreover, the films also have an important supporting role for the sealing composition, allowing the transport and handling thereof on the plants. Such films are also referred to as self-supporting films.

The self-supporting protective film may be temporary and be removed after vulcanisation, or permanent as it can remain in the final structure of the tyre, optionally contributing to the sealing of the holes.

The protective films used in the industry for this purpose are of various nature and thickness.

A soundproof tyre for vehicle wheels typically comprises a noise reducing element in the inner cavity, preferably fixed in the form of stripes on the inner surface of the liner.

The noise reducing element is able in particular to mitigate the so-called cavity noise. Said cavity noise is generated during the rolling of the tyre on the road, when the air present in the inner annular cavity is placed in vibration, as it is cyclically compressed in the tread crushing step, thus generating sound waves that are amplified by resonance. Cavity noise then propagates to the passenger compartment of the vehicle, by transmission through the rim, the hub, the suspension and the frame, and is perceived as very annoying by passengers. The frequencies at which the air resonates in the cavity are inversely proportional to the tyre circumference, and depend, among other things, also on the shape of the cavity itself, on the nature and shape of the materials that internally line it. Indicatively, the resonance frequency can range from about 50 to 400 Hz, typically around 180 - 220 Hz for car tyres, with a diameter of about 600 to 800 mm and 130 - 150 Hz for tyres of heavy vehicles, with a diameter of about 750 to 1200 mm. During use, the noise reducing materials inserted in the inner cavity of tyres are subject to very significant mechanical and thermal stresses.

In fact, during rolling, on the one hand they are constantly stretched by deformation of the tyre and on the other hand, they are heated well above ambient temperature, due to the heat generated by the tread in the use on the road. Therefore, for the specific application, the noise reducing materials in use generally exhibit good thermal and mechanical properties so as not to become degraded and/or deformed due to the combined action of heat and stress. In particular, soundproof tyres have been developed which comprise noise reducing materials based on heat-resistant polymeric materials, such as polyurethanes, which have high melting points, generally higher than 150 °C, and which are typically used in microcellular structures with open cells to improve the acoustic performance and at the same time allow a more rapid and efficient dispersion of the heat compared to closed-cell materials.

US2008/0264539A1 and US2013/0087267A1 describe soundproof tyres and the manufacture thereof.

WO2015/149959A1 describes soundproof tyres comprising a self-sealing material layer.

### SUMMARY OF THE INVENTION

In the automotive industry there is a growing demand to improve driver and passenger comfort, particularly to reduce the noise of vehicles, especially high-end vehicles. In addition, the need is also felt to have tyres which, in addition to being less noisy, are at the same time self-sealing, i.e. tyres that provide for self-sealing and allow for safe travelling in the event of puncture.

The Applicant has undertaken studies for the manufacture of self-sealing and soundproof tyres for vehicle wheels and has found that the simple combination of the conventional components of the self-sealing - sealing composition with optional self-supporting film - and soundproofing system - noise reducing material - led to disappointing results in terms of sealing.

In particular, the Applicant has implemented a tyre comprising a sealing system - consisting of a layer of sealing elastomeric composition, applied on the innermost surface of the same (i.e. on the inner surface of the liner) and a self-supporting film - and a conventional sound-absorbing material (strips of an open-microcell polyurethane foam), adhered on the film. This tyre has proved to be poor with regard to the sealing performance. In fact, in the dynamic sealing test, it was observed that the conventional noise reducing element interfered with the closing of not only medium-large (4 and 5 mm), but also small (3 mm) punctures.

Without wishing to be bound to any interpretative theory, the Applicant believes that the polyurethane foam, due to both the properties of the material itself and to its open-microcell structure, would be finely crushed by the movements of the nail at the puncture. Upon the extraction of the same, the powder could be dragged by the sealing elastomeric composition into the hole and here it would not be able to oppose sufficient resistance to air passage. In fact, the polyurethane foam within the puncture would create micro-channels that would neutralise the sealing action. The Applicant has surprisingly found that it is possible to significantly improve the sealing in this type of tyres by using special closed-cell polyolefin materials, preferably with closed macrocells, optionally perforated, as noise reducing materials. With these materials it has been possible to combine excellent soundproofing properties and high sealing performance in the same tyre in a simple and functional manner. Moreover, these materials surprisingly withstand the thermal and mechanical stresses that are generated in the rolling of the tyre, maintaining their physical integrity and noise reduction capability over time. Moreover, the present materials are insensitive to humidity, they do not absorb water and are particularly light.

Therefore, a first aspect of the present invention is a soundproof self-sealing tyre for vehicle wheels comprising:
- a carcass structure;
- a tread band in a radially outer position with respect to said carcass structure;
- a layer of airtight elastomeric material (liner), applied in a radially inner position with respect to the carcass structure;
- a layer of sealing elastomeric composition applied on at least a portion of the radially inner surface of the layer of airtight elastomeric material and extending axially at least at a part of the tread band;
- optionally, a self-supporting film, applied on at least a portion of the radially inner surface of the layer of sealing composition;
- a noise reducing element applied on at least a portion of the radially inner surface of the layer of sealing elastomeric composition or, if present, of the self-supporting film,
wherein said noise reducing element comprises a closed-cell foamed polyolefin material, preferably with closed macrocells.

A second aspect of the present invention relates to a first process for manufacturing a soundproof self-sealing tyre for vehicle wheels according to the invention, and provides for the application of the sealing system and the noise reducing element in the finished tyre. In particular, the first process comprises at least:
i) providing a vulcanized and moulded tyre, wherein said tyre comprises at least:
   - a carcass structure;
   - a tread band in a radially outer position with respect to said carcass structure;
   - a layer of airtight elastomeric material (liner), applied in a radially inner position with respect to the carcass structure;
ii) applying a layer of sealing elastomeric composition on at least a portion of the radially inner surface of the layer of airtight elastomeric material extending axially at least at a part of the tread band and optionally, a self-supporting film on the radially inner surface of the layer of sealing composition, so as to provide a self-sealing tyre;
iii) providing a noise reducing element comprising a closed-cell foamed polyolefin material, preferably with closed macrocells, optionally perforated;
iv) optionally cleaning at least one portion of the radially inner surface of the optional self-supporting film of said self-sealing tyre;
v) optionally applying an adhesive on the at least a portion, optionally cleaned, of the radially inner surface of the optional self-supporting film of the tyre and/or on the afterwards radially outer surface of said noise reducing element;
vi) making the optionally tackified surface of said noise reducing element adhere to the at least a portion of the radially inner surface of the layer of elastomeric sealing composition or, if present, on at least a portion, optionally cleaned and tackified, of the radially inner surface of the self-supporting film, so as to provide a soundproofed self-sealing tyre.

A third aspect of the present invention relates to a second process for manufacturing a soundproof self-sealing tyre for vehicle wheels wherein the sealing elastomeric composition and the self-supporting film are applied on the green tyre, vulcanised and moulded, and the noise reducing element is applied only thereafter. This second process comprises at least:
i) providing a vulcanized and moulded self-sealing tyre, wherein said tyre comprises at least:
   - a carcass structure;
   - a tread band in a radially outer position with respect to said carcass structure;
   - a layer of airtight elastomeric material (liner), applied in a radially inner position with respect to the carcass structure;
   - a layer of sealing elastomeric composition applied on at least a portion of the radially inner surface of the layer of airtight elastomeric material extending axially at least at a part of the tread band;
   - a self-supporting film, applied on the radially inner surface of the layer of sealing composition;
iii) providing a noise reducing element comprising a closed-cell foamed polyolefin material, preferably with closed macrocells, optionally perforated;
iv) optionally cleaning at least one portion of the radially inner surface of the self-supporting film of said tyre or removing the film;
v) optionally applying an adhesive on the at least a portion, optionally cleaned, of the radially inner surface of the self-supporting film, if present, and/or on the afterwards radially outer surface of said noise reducing element;
vi) making the optionally tackified surface of said noise reducing element adhere to the at least a portion, optionally cleaned and tackified, of the radially inner surface of the self-supporting film, if present, or if the film has been removed, directly to the layer of elastomeric sealing composition so as to provide a soundproofed self-sealing tyre.

### BRIEF DESCRIPTION OF THE DRAWINGS

The accompanying drawings are provided for indicative and, thus, non-limiting purpose only.
Figure 1 schematically shows a radial half-section of a soundproof seal-sealing tyre for vehicle wheels.
Figure 2 shows a section of a sealing composite associated with two lists of elastomeric material and intended to form part of the soundproof seal-sealing tyre in figure 1;
Figure 3 is a sectional view of a multilayer sealing composite comprising the sealing composite in figure 2 and a second removable protective film;
- Figure 4 shows the cavity noise damping performance in the percussion test of tyres according to the invention (samples INV1-3), and a comparison self-sealing tyre C1 without noise reducing element;
- Figures 5 and 6 show the cavity noise damping performance in the noise measurement test in a semi-anechoic chamber of a tyre according to the invention (sample INV3), comparative tyres C1 without noise reducing element, and C2, comprising a conventional open-microcell polyurethane foam, at speeds of 65 and 80 Km/h;
- Figures 7a and 7b show the graphs relating to the internal noise measured in tests on the road at speeds of between 40 and 80 Km/h in two points of the passenger compartment of a vehicle with tyres according to the invention, comprising a foamed polyethylene material with perforated closed macrocells (sample INV3) and comparative tyres, not comprising any noise reducing element (C1) or comprising conventional polyurethane materials with open microcells (C2);
Figure 8 is a photograph of a foamed polyolefin material sample with perforated closed macrocells preferably used in a soundproof tyre, next to a ruler with reference millimetre scale;
Figure 9 shows the cavity noise damping performance in the noise measurement test in a semi-anechoic chamber of a tyre according to the invention (sample INV3) before and after the fatigue test.

### DEFINITIONS

The term "phr" (acronym of "parts per hundred of rubbers") indicates parts by weight per 100 parts by weight of the total elastomeric base. Any additives (such as any elastomeric resins or extension oils) are not considered for the calculation of the 100 parts of the total elastomeric base.

The term "polyolefin", as used herein, means any thermoplastic polymer derived from the polymerisation of unsaturated hydrocarbons containing the ethylene or diene function.

In particular, the term polyolefin includes olefin homopolymers and copolymers and mixtures thereof. Specific examples include ethylene, propylene, butene homopolymers, ethylene-alpha-olefin, propylene-alpha-olefin, butene-alpha-olefin copolymers, polymethylpentenes and modified polymers thereof.

The term "sealing composite" refers to a composite comprising a sealing elastomeric composition layer in association with and supported by a self-supporting film.

The terms "macrocell" or "macrocellular" referred to a foamed material are meant to indicate that the cells of said material have an average size of the cell of at least 1.5 mm, measured according to ASTM D3576.

The term "through perforation" means a perforation which crosses the foamed material throughout its thickness.

The term "partial perforation" means a perforation which does not cross the foamed material throughout afterwards its thickness. The phrase "afterwards radially outermost surface of said noise reducing element" is meant to indicate the noise reducing element surface which in the finished tyre will not be in contact with the air in the cavity but will adhere to the self-supporting film, if present, or directly to the sealing elastomeric composition.

The term "post-treated" referred to a tyre or "post-treatment" to a manufacturing process thereof, is meant to indicate that the sealing elastomeric composition, and optionally the self-supporting film, are applied on the tyre already vulcanised and moulded, such as described for example in US4418093.

The term "built-in" referred to a tyre or a manufacturing process thereof is meant to indicate that the sealing composite is applied onto the green tyre and with it subjected to vulcanisation and moulding, such as described for example in WO2011064698 to the name of Applicant.

### DETAILED DESCRIPTION OF THE INVENTION

The soundproof seal-sealing tyre according to the present invention can exhibit at least one of the following preferred features, taken individually or in combination with the others.

For the purposes of the present invention, the composition of the sealing material may be different: the compositions described in the following documents, incorporated herein as reference, may for example be used: WO2009143895, WO2011064698 or WO2013093608 to the name of the Applicant, or also in US2004/194862, US2012/0180923, US2012/234449 or US8609758,

Preferably, the sealing composition comprises
(a) at least one unsaturated styrenic thermoplastic elastomer, and/or
(b) at least one diene elastomer;
(c) optionally at least one crosslinking agent;
(d) at least one tackifying resin,
(e) optionally at least one plasticizer,
(f) optionally at least one reinforcing filler
(g) optionally at least one homogenizing agent, and
(h) optionally at least one peptizer agent.

Preferably, the unsaturated styrenic thermoplastic elastomer (a) is a styrene - diene - styrene block polymer, preferably selected from styrene / butadiene / styrene (SBS), styrene / isoprene / styrene (SIS), styrene / butadiene / isoprene / styrene (SBIS) block copolymers, and mixtures thereof, optionally also comprising the corresponding diblock thermoplastic elastomers, such as styrene-butadiene (SB) and styrene-isoprene (SI). Particularly preferred are the styrene / isoprene / styrene block copolymer or mixtures of one or more unsaturated styrenic thermoplastic elastomers containing at least 50% of styrene / isoprene / styrene block copolymer.

Preferably, the block copolymer has a styrene content of from about 10% to about 30%, more preferably from about 12% to about 18%.

Preferably, the block copolymer has a percentage of "diblock" of less than 70%, even more preferably less than 60%.

Preferably, the percentage of "diblock" is of between 15% and 55%.

By diblock percentage it is meant the percentage of block polymer consisting of only two segments: a polystyrenic one and an elastomeric one.

While such "diblocks" are present in the block polymers mainly consisting of three segments - styrene-elastomer-styrene and are considered as an impurity due to the imperfect efficiency of the "living polymerization", the Applicant believes that the presence of diblocks can be advantageously modulated in order to improve the quality of the sealing composition.

It is believed that a greater percentage of diblock corresponds to greater tackiness, but lower modulus and less cohesion of the sealing composition.

Particularly preferred are styrene / isoprene / styrene block copolymers with a styrene content equal to or less than 20%, more preferably of between 14% and 20%.

These copolymers are for example marketed under the name Europrene® SOL T190, T9133 of Polimeri Europa, Vector® 4113, 4114 of Dexco Polymers, Kraton® D1111, D1112 and D1107J of Kraton.

Preferably, the optional at least one diene elastomer (b), either synthetic or natural included in the sealing composition, may be selected from those commonly used among the elastomeric materials crosslinkable with sulphur or peroxides, which are particularly suitable for manufacturing tyres, i.e. from the elastomeric polymers or copolymers with an unsaturated chain having a glass transition temperature (Tg) generally below 20 °C, preferably in the range from 0 °C to -110 °C. These polymers or copolymers may be of natural origin or may be obtained by solution polymerisation, emulsion polymerisation or gas phase polymerisation of one or more conjugated diolefins, optionally mixed with at least one comonomer selected from monovinylarenes and/or polar comonomers in an amount not higher than 60% by weight. Conjugated diolefins generally contain from 4 to 12, preferably from 4 to 8 carbon atoms and may be selected, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene or mixtures thereof. 1,3-Butadiene or isoprene are particularly preferred.

Polar comonomers that may optionally be used can be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile or mixtures thereof.

Preferably, the synthetic or natural elastomer included in the sealing composition can be selected, for example, from: cis-1,4-polyisoprene (natural or synthetic rubber), 3,4-polyisoprene, polybutadiene (in particular polybutadiene with a high content 1,4-cis), optionally halogenated isoprene/isobutene copolymers, 1,3-butadiene/acrylonitrile copolymers, styrene/1,3-butadiene copolymers (SBR), styrene/isoprene/1,3-butadiene copolymers, styrene/1,3-butadiene/acrylonitrile copolymers, or mixtures thereof.

The optional diene elastomer (b) may be, at least in part, pre-crosslinked (b'). Suitable pre-crosslinked elastomers are described for example in WO2009143895. Preferably, the at least one crosslinking agent (c) is selected from sulphur, sulphur-containing molecules preferably in the presence of compounds containing zinc and fatty acids, or peroxides.

Examples of specific sulphur-containing molecules that can be used as crosslinking agents in the sealing materials for the manufacture of self-sealing tyres are elemental sulphur, thiurams, such as tetraisobutyl thiuram disulphide or tetrabenzyl thiuram disulphide, or dithiophosphates, such as zinc dibutyldithiophosphate, or dithiocarbamates, such as zinc dimethyl dithiocarbamate, together with ZnO or compounds containing zinc, fatty acids and sulphenamides, such as N-t-butyl-2-benzothiazyl sulphenamide (TBBS), or N-cyclohexyl-2-benzothiazyl sulphenamide (CBS), or thiazoles, such as 2,2'-dithiobis-(benzothiazole) (MBTS).

Specific examples of peroxides that can be used as crosslinking agents in the sealing materials for the manufacture of self-sealing tyres are organic peroxides such as dicumyl peroxide (DCP), 2,5-dimethyl-2,5-di(t-butyl-peroxy)hexane (DBPH), bis-(2,4-dichlorobenzoyl)peroxide (DCBP), di-t-butyl-peroxide.

Preferably, a peroxide is used as crosslinking agent, even more preferably 2,5-dimethyl-2,5-di(t-butyl-peroxy)hexane (DBPH).

A specific example of DBPH that can be used is a mixture of 45% DBPH with calcium carbonate and silica marketed under the name Luperox 101 XL45 by Arkema.

The amount of peroxide preferably ranges from about 0.1 phr to about 6 phr.

The presence of peroxide or sulphur or other crosslinking agent allows the partial chemical crosslinking of the sealing composition during the vulcanisation of the tyre so as to improve the dynamic sealing features of the sealing composition layer.

Preferably, the at least one tackifying resin (d) advantageously used in the present invention can be selected from the group of hydrocarbon resins, phenolic-based resins, carbon-based resins, xylene-based resins and natural resins such as rosin-based resins or terpene-based resins, having a number average molecular weight of between 200 and 50000, typically between 500 and 10000, which impart tackiness when the resin is mixed with natural or synthetic rubber.

The above number average molecular weight (Mn) may be measured according to techniques known in the field, such as for example by gel permeation chromatography (GPC). Examples of commercial products of hydrocarbon resins include resins based on aromatic petroleum such as PETCOAL manufactured by Tosoh Co., Ltd; resins based on C5/C9 hydrocarbons such as PETROTACK manufactured by Tosoh Co; resins based on C5 hydrocarbons such as Escorez® 1102 (manufactured by Exxon Mobil).

Examples of phenol-based resin comprise resins with an alkylphenolformaldehyde base and derived resins modified with rosin, resins with alkylphenol-acetylene base, modified alkylphenolic and terpene-phenol resins. Specific examples indicated by brand include commercial products such as RESINA SP-1068 (manufactured by SI GROUP Inc.) which is an octylphenolformaldehyde resin, and KORESIN (manufactured by BASF Company) which is a pt-butylphenol-acetylene resin.

Examples of carbon-based resins include coumarone-indene resins. Specific examples include commercial products, cited by brand, such as NOVARES C resins (manufactured by RUTGERS CHEMICAL GmbH), which are synthetic indene-coumarone resins (such as NOVARES C10, C30, and C70).

Examples of natural resins are rosin resins and terpene resins, which may be as such or modified: examples of these classes are the terpene resins DERCOLYTE manufactured by DRT, resins derived from rosin acids DERTOLINE, GRANOLITE and HYDROGRAL, manufactured by DRT.

Examples of xylene-based resins include xylene-formaldehyde resins.

The above tackifying resins may be used alone or mixed together.

Preferably, one or more plasticiser (e) selected from extender oils or liquid polymers commonly used in the industry, may be added to the sealing composition in a total amount preferably of less than 200 phr, more preferably less than 100 phr, even more preferably less than 80 phr.

Examples of suitable plasticising oils are polyolefin oils, paraffinic oils, naphthenic oils, aromatic oils, mineral oils and mixtures thereof.

Examples of suitable liquid polymers are liquid polymers based on butadiene (BR), isoprene (IR), isoprene/butadiene rubber (IBR), styrene/butadiene rubber (SBR), optionally hydroxy and epoxy functionalised, or depolymerized liquid natural polymers (NR).

At least one reinforcing filler (f) may be advantageously added to the sealing composition above, generally in an amount of from 1 phr to 40 phr, preferably from 5 phr to 15 phr. The reinforcing filler may be selected from those commonly used for crosslinked products, in particular for tyres, such as carbon black, silica, alumina, aluminosilicates, calcium carbonate, kaolin or mixtures thereof. Carbon black, silica and mixtures thereof are particularly preferred.

Preferably, the carbon black reinforcing filler may be selected from those having a surface area of not less than 20 m²/g (as determined by Statistical Thickness Surface Area - STSA - according to ISO 18852:2005).

Preferably, the sealing composition may further comprise from about 1 phr to about 20 phr of at least one homogenizing agent (g), used to facilitate the mixing of the polymers comprising styrene, which have an aromatic character, with the other elastomers, which have a predominantly aliphatic, or at least non-aromatic character. Typically, such homogenizing agents comprise a mixture of hydrocarbon resins, esters of fatty acids and naphthenic oils. A preferred example of homogenizing agent is the commercially available material as Struktol 40 MS manufactured by Struktol Canada Inc.

Preferably, the sealing composition may further comprise from 0.05 phr to 5 phr of at least one peptizer agent (h), to facilitate chewing, thus reducing the viscosity and improving the uniformity of the resulting mixture. Thiophenols and disulphides are widely employed as peptizer agents, such as pentachlorothiophenol and dibenzamidodiphenyl disulphide. Specific examples include Akrochem peptizer 4P and 6P manufactured by Akrochem USA corporation, and Renacit 11/WG manufactured by Lanxess GmbH.

The composition and the thickness of the sealing layer are selected, preferably within the above-mentioned features, in relation to the type of tyre to be manufactured and to the selected production process (built-in or post-treated), or so as to provide the optimal viscoelastic features and tackiness for each condition of use of the tyre itself.

Preferably, the layer of sealing composition, in the vulcanized tyre, has a thickness greater than 1.5 mm, preferably greater than 2 mm. Preferably, the layer of sealing composition, in the vulcanized tyre, has a thickness of less than 5 mm, preferably less than 4 mm.

Preferably, a sealing composition comprises
(a) 20 phr to 100 phr of at least one unsaturated styrene thermoplastic elastomer,
(b) 0 to 80 phr of at least one natural or synthetic diene elastomer,
(c) 0.1 to 6 phr of at least one crosslinking agent,
(d) 20 to 200 phr, preferably 30 phr to 150 phr, of at least one tackifying resin, and optionally
(e) 10 to 200 phr, preferably 20 to 60 phr, of plasticiser (oil or liquid polymer), and
(f) 1 to 40 phr, preferably 5 to 30 phr, of at least one reinforcing filler.

Preferably, if the tyre of the invention is produced as described in the first process (post-treated), a sealing composition as described for example in WO2009/059709 may be used.

Preferably, if the tyre is produced according to the procedure known as built-in (according to the process of the invention), the sealing composition may comprise
(b) 55 to 95 phr of one or more natural or synthetic diene elastomers,
(b') 5 to 45 phr of one or more pre-crosslinked elastomers,
(d) 5 to 50 phr of at least one tackifying resin, and
(f) 1 to 40 phr of at least one reinforcing filler.

Preferably, the pre-crosslinked elastomer (b') is a butadiene-styrene copolymer produced by a polymerisation process in a hot emulsion, with a styrene content of 2 to 50% by weight, preferably 15% to 35%. The elastomers SBR1009, 1009AF and 4503C manufactured by Lion Elastomers are particularly preferred.

According to a particularly preferred embodiment, the sealing composition in the case of built-in may further comprise
(c) 0.1 to 6 phr of at least one crosslinking agent, and/or
(e) 25 to 65 phr of plasticiser (oil or liquid polymer), and/or
(g) from about 1 phr to about 20 phr of at least one homogenizing agent, and/or
(h) 0.05 phr to 1 phr of at least one peptizer agent.

Suitable sealing compositions may be, for example, the compositions cited in:
WO2011064698, comprising:
   - 40 to 80 phr, preferably 50 phr to 70 phr, of a synthetic or natural elastomer,
   - 20 phr to 60 phr, preferably 30 phr to 50 phr, of an elastomeric block polymer, preferably a styrene-butadiene elastomer (SBR),
   - 40 to 60 phr, preferably 50 phr to 60 phr, of process oil,
   - 15 to 60 phr, preferably 20 phr to 40 phr, of at least one tackifying agent; and
   - 1 phr to 40 phr, preferably 5 phr to 30 phr, of at least one reinforcing filler, the ingredients of which are defined therein in the description;
WO2013093608 comprising
   - at least about 20 phr of at least one unsaturated styrene thermoplastic elastomer,
   - 0 to 80 phr of at least one diene elastomer;
   - from about 0.1 phr to about 6 phr of a crosslinking agent, the ingredients of which are defined therein in the description;
US2012180923 comprising
   - an unsaturated diene elastomer as the main elastomer; 30 to 90 phr of a hydrocarbon resin;
   - 0 to 60 phr of a liquid plasticiser, whose Tg (glass transition temperature) is less than -20 °C, and
   - 0 to less than 30 phr of a reinforcing filler, the ingredients of which there are defined therein in the description;
US8609758 comprising
   - a styrenic thermoplastic elastomer (TPS) as the main elastomer;
   - more than 200 phr of a thinning oil, and
   - more than 20 phr of a hydrocarbon resin, whose glass transition temperature (Tg) is greater than 0 °C, the ingredients of which are defined therein in the description;
WO2009143895 comprising
   - 55 to 95 phr, preferably 65 to 90 phr, of at least one natural or synthetic elastomer;
   - 5 to 45 phr, preferably 10 to 35 phr, of at least one pre-crosslinked elastomer, preferably a styrene-butadiene elastomer;
   - 5 to 50 phr, preferably 20 phr to 40 phr, of at least one tackifying agent, and
   - 1 to 40 phr, preferably 5 phr to 30 phr, of at least one reinforcing filler, the ingredients of which are defined therein in the description;
US2004194862 comprising
   - 0.2 to 20 parts by weight of peroxide, and
   - 5 to 50 parts by weight of at least one selected from the group consisting of an ethylene /alpha-olefin liquid polymer, liquid polybutadiene and liquid polyisoprene, 100 parts by weight of a rubber containing not less than 50% by weight of polyisobutylene, the ingredients of which are defined therein in the description.

Preferably, the tyre according to the invention comprises a self-supporting film.

Preferably, the self-supporting film is a thermoplastic film comprising at least 50%, preferably at least 70%, 80%, 90% and more, of one or more polymers selected from:
- polyamides (as described for example in EP1435301 on behalf of Yokohama, in WO2011064698 on behalf of the Applicant, optionally also in admixture with elastomers such as, for example, in US2009/0084482 on behalf of Goodyear), preferably polyamides selected from Nylon 6, preferably non-oriented (cast), Nylon 12, Nylon 6,6, or polyamide block copolymers with flexible polyester segments, marketed as "Pebax" by Arkema, described in US2012/0180923;
- polyolefins (as described in the Italian patent application no. 102015000086751 on behalf of the Applicant and for example in US2010/0300593 on behalf of Michelin, entirely incorporated herein by reference), preferably a polyolefin selected from homo- and copolymers of ethylene, propylene, C4-C20 alpha-olefins, preferably C4-C10 alpha-olefins, and mixtures thereof, more preferably it is selected from homo- and copolymers of ethylene and mixtures thereof, where such polyolefins have a melt flow index (MFI) of less than 4, preferably less than 2, more preferably less than 1.5, even more preferably less than 1 gram per 10 minutes (ASTM D1238, 190 °C/2.16 Kg);
- polyesters, as described for example in WO2011064698 application on behalf of the Applicant;
- chlorinated polymers (PVC, PVDC), as described for example in US2012/234449, optionally in admixture with high molecular weight plasticising agents, and in US2010/0300593, both on behalf of Michelin;
- fluorinated polymers such as ethylene-propylene fluoride (FEP), ethylene tetrafluoroethylene (ETFE) or polytetrafluoroethylene (PTFE), as described for example in US2012/0199260 on behalf of Michelin, preferably PTFE;
- polyurethanes (TPU) as described in WO2015079384, fully incorporated herein as a reference, preferably TPU polyether.

Preferably, the self-supporting film is a thermoplastic film comprising one or more polyamides, or one or more polyolefins.

Preferably, the self-supporting film is a thermoplastic film consisting of one or more polyamides, preferably selected from Nylon 6, preferably not oriented, Nylon 12, Nylon 6-6, or of one or more polyolefins, preferably selected from homo- and copolymers of ethylene, propylene or C4-C20 alpha-olefins.

Preferably, the self-supporting thermoplastic film consists of one or more polyolefins selected from homo- and copolymers of ethylene, propylene, C4-C20 alpha-olefins, preferably C4-C10 alpha-olefins, more preferably selected from homo- and copolymers of ethylene and mixtures thereof.

Preferably, in the case of polyolefin self-supporting film, the at least one polyolefin is characterised by a melt flow index (MFI) of less than 4, preferably less than 2, more preferably less than 1.5, even more preferably less than 1 gram per 10 minutes (ASTM D1238, 190 °C/2.16 Kg).

The at least one polyolefin of the present film is characterised by a melt flow index (MFI) generally in the range of from 0.01 to 4.0, preferably from 0.1 to 2.0, more preferably from 0.1 to 1.0, even more preferably from 0.2 to 0.9 gram per 10 minutes (ASTM D1238, 190 °C/2.16 Kg).

Polyethylene is generally classified according to density as high density polyethylene (HDPE) when it has density greater than or equal to 0.941 g/cm³, medium density (MDPE) when it has density in the range from 0.926 to 0.940 g/cm³, linear low density (LLDPE) when it has density in the range from 0.915 to 0.925 g/cm³, low density (LDPE) when it has density in the range from 0.910 to 0.940 g/cm³, very low density (VLDPE) when it has density in the range from 0.880 to 0.915 g/cm³.

Preferably, the polyethylene of the self-supporting thermoplastic film is a linear low density polyethylene (LLDPE), or a low density polyethylene (LDPE), or a low density polyethylene copolymerised with vinyl acetate (LDPE-EVA), or medium density polyethylene (MDPE), or mixtures thereof.

Generally, the polyethylene has a melting temperature of less than about 135 °C, typically between about 110 and about 130 °C.

Examples of suitable commercially available polyolefins are polyethylenes selected from Exxon LL 1201 KG (LLDPE MFI 0.70 g/10 min at 190 °C/2.16 Kg; 1250 ppm slip agent), Exxon Enable 20-05 HH (m-PE MFI 0.50 g/10 min at 190 °C/2.16 Kg, no slip agent), Exxon Exceed 1012 MK (m-VLDPE MFI 0.50 g/10 min at 190 °C/2.16Kg, 1000 ppm slip agent) or mixtures thereof.

Preferably, said polyolefin self-supporting film further comprises from 1 to 50%, preferably from 10 to 40%, more preferably from 15 to 35% by weight of one or more polar polymers selected from polyvinyl acetate, ethylene-vinyl acetate copolymers, EVOH, polyvinyl acetate with a high degree of hydrolysis (EVOH), polyvinyl alcohol (PVA, PVOH) or mixtures thereof.

Preferably, said polyolefin self-supporting film comprises at least 50%, 60%, 70%, 80%, 90% of a polyethylene having a melt flow index (MFI) of less than 4, preferably less than 2, more preferably less than 1.5, even more preferably less than 1 gram per 10 minutes (ASTM D1238, 190 °C/2.16 Kg).

Advantageously, the polyolefin-based thermoplastic film allows for a more prolonged stability of the green tyre over time with respect to the stability of the polyamide-based film. This allows greater flexibility in the management time of the green tyre between the shaping and vulcanisation and/or a reduced need for expensive and complex fixing of the film joining.

Preferably, the self-supporting polyolefin thermoplastic film has an elongation at break greater than 100%, more preferably greater than 150%, even more preferably equal to or greater than 200% in the longitudinal direction, measured according to ASTM D882 on a 12.57 mm wide test specimen deformed at a speed of 500 mm/min at 23 °C.

Preferably, the self-supporting film is an elastomeric film comprising at least 50%, preferably at least 70%, 80%, 90% and more, of one or more polymers selected from polyurethanes (such as the TPU described for example in WO2015/079384 on behalf of the Applicant, entirely incorporated herein as a reference) and block polymers (as described for example in US2012/0180923 on behalf of Michelin, entirely incorporated herein as a reference).

The self-supporting film may be either crosslinked or non-crosslinked; preferably, it is crosslinked using methods known to the man skilled in the art, such as for example radiation, peroxides or ionomers.

Preferably, the surface of the self-supporting film in contact with the sealing composition may be treated so as to increase the adhesion capacity thereof, for example, with a corona treatment or a plasma treatment and/or by coating with and/or by incorporating polar copolymers - such as for example EVA, EVOH - in the film itself or only in the corresponding surface layer thereof, in case of multilayer film.

Preferably, if the sealing composite is applied on the green, i.e. both the sealing composition and the self-supporting film are applied in the green tyre, the surface of the film which is located in a radially innermost position in the tyre, i.e. the one that during the tyre vulcanization process is exposed to the vulcanisation chamber, is coated with a composition comprising flowing or anti-block agents that facilitate the flowing.

Preferably, if the sealing composite is applied in the green tyre, the two outer surfaces of the self-supporting thermoplastic film can have different properties, i.e. an increased adhesion capacity towards the sealing composition the one, and an improved flow towards the vulcanisation chamber the other, which can be obtained according to one or more of the treatments considered above.

Agents suitable for facilitating the flow are for example both mono unsaturated primary amides, such as erucamide and oleamide, and saturated primary amides, such as stearammide and beenammide; other agents are secondary amides, such as stearyl erucamide and oleyl palmitamide, and bis-amides, such as ethylene bis stearamide; preferably, they are primary amides.

The self-supporting film may be monolayer or multilayer, such as bi-layer.

Preferably, the self-supporting film prior to shaping has a thickness of between 10 µm and 50 µm, preferably between 10 and 40 µm, more preferably between 15 and 30 µm.

Preferably, in the finished tyre, the self-supporting film has a thickness of between 7 µm and 40 µm, preferably between 10 and 30 µm.

The tyre according to the invention comprises a noise reducing element comprising, preferably consisting of, at least one closed-cell foamed polyolefin material, preferably with closed macrocells.

Preferably, the macrocellular foamed material comprises cells having an average cell size of at least 1.5 mm, more preferably at least 3 mm, even more preferably at least 4 mm, size evaluated according to ASTM D3576.

Preferably, the macrocellular foamed noise reducing material comprises cells having an average cell size of between 1.5 mm and 15 mm, 2 mm and 10 mm, 3 mm and 10 mm, more preferably between 4 mm and 8 mm according to ASTM D3576.

According to an embodiment, the foamed polyolefin material comprises a number of macrocells in 25 mm less than 30, preferably less than 20, more preferably less than 10, measured according to the method BS 4443/1 Met.4.

Preferably, the tyre according to the invention comprises, in the inner cavity, a noise reducing element comprising, preferably consisting of, a closed-macrocell foamed polyolefin material having a number of cells of less than four per linear centimetre.

According to another embodiment, the noise reducing element of the tyre according to the present invention comprises, preferably consists of, at least one closed-cell foamed polyolefin material, such as the materials X105SM or K630 sold by Tekspan Automotive, in which the number of cells in 25 mm measured according to the method BS 4443/Met.4 is of between 40 and 250.

Preferably, the noise reducing element of the tyre according to the present invention comprises, preferably consists of, a foamed polyolefin material, obtainable by expanding a polyolefin material selected from homo-and copolymers of ethylene, propylene, C4-C20 alpha-olefins, preferably C4-C10 alpha-olefins, and mixtures thereof, most preferably from homo-and copolymers of ethylene and mixtures thereof.

Examples of commercially available polyolefins are polyethylenes, polypropylenes, polybutenes, and copolymers thereof, including ethylene copolymers with alpha-olefins, and mixtures thereof.

Preferably, the polyolefin material is a polyethylene selected from ethylene homopolymers, ethylene copolymers with propylene and ethylene copolymers with a C4-C8 alpha-olefin.

Preferably, the polyethylene is a low density polyethylene (LDPE), with a density equal to or greater than 0.940 g/cm³, preferably between 0.910-0.940 g/cm³.

Generally, the polyethylene has a softening temperature of less than about 120 °C, typically between about 95 and about 115 °C.

Generally, polyethylene has a melt flow index of between 0.01 and 100, preferably between 0.05 and 50, more preferably between 0.1 and 20 grams per 10 minutes (ASTM D1238, 190 °C/2.16).

Preferably, the noise reducing element of the tyre according to the present invention consists of a closed-cell foamed polyolefin material, preferably with closed macrocells, optionally perforated.

Preferably, the noise reducing element consists of a closed-cell foamed polyethylene material, preferably with closed macrocells, optionally perforated.

Preferably, the foamed polyolefin material has a density not greater than 40 Kg/m3, preferably not greater than 30 Kg/m3, more preferably not greater than 25 Kg/m3, measured according to ASTM D3575-08 Suffix W.

Preferably, the foamed polyolefin material is characterised by a water absorption, according to UNI EN 12088 (RH>95% after 28 days) of less than 6 Kg/m², more preferably less than 4 Kg/m², even more preferably less than 3 Kg/m².

Preferably, the foamed polyolefin material is characterised by compressive strength according to ISO 3385 1986 part 1, at a compression rate of 100 mm/min and at the fourth compression, according to the following Table 1:

**Table 1**

| Compression | Resistance (KPa) of at least | Resistance (KPa) preferably of at least |
|---|---|---|
| 25% | 1 | 2 |
| 50% | 4 | 5 |
| 70% | 20 | 22 |

The foamed polyolefin material used as noise reducing element in the tyre of the present invention may be crosslinked.

The foamed polyolefin material used as noise reducing element in the tyre of the present invention is a closed-cell foamed material, preferably closed-macrocells, preferably perforated.

Noise reducing foamed materials with closed macrocells, preferably perforated, are described for example in patent application WO01/70859 on behalf of Dow Chemical.

Perforated closed-cell foamed materials are known for conventional applications and described for example in patent application WO2012/156416A1 and in other documents cited therein.

Preferably, said closed-cell foamed polyolefin material, preferably with closed macrocells, has at least one perforation, more preferably at least 5, at least 10, at least 20, at least 30 perforations per 10 cm² surface.

The perforation of the foamed material may be partial, through or a combination of both, i.e. a double or triple perforation, preferably it is a double perforation, which is a combination of through and partial perforation.

Preferably, the foamed polyolefin material comprises at least one through perforation and at least one partial perforation.

The partial perforation has a depth less than the thickness of the foamed material, generally a depth between about 25% and 85% of such a thickness.

The through or partial perforations crossing the foamed material are typically circular in cross-section, but they may also have other shapes such as elliptical, square, triangular, oval.

The average width of the perforations is generally greater than 0.01 mm, preferably greater than 0.1 mm, preferably greater than 0.5 mm.

The average width of the perforations is preferably of between 0.01 mm and 2 mm, more preferably between 0.05 mm and 1.0 mm.

Partial and through perforations may have the same shape and/or width or they may be different from each other.

Typically, the perforations are evenly distributed on at least a part, preferably on the whole, surface of the foamed material sheet, at a distance that depends among other things on the thickness of the same.

An example of a double perforation process of a closed-cell foamed material is described in EP1026194B1.

The perforation of the foamed material causes the opening of a part of the closed macrocells.

The open cell content is generally determined by standardised tests, such as the method described in ASTM D2856-A.

Preferably, the foamed material after perforation still comprises at least 40% by volume, preferably at least 60%, more preferably at least 65% of closed cells.

Preferably, the foamed material after perforation comprises at least 10% by volume, preferably at least 20%, at least 25%, at least 30% of cells opened by the perforation.

Preferably, the foamed material after perforation comprises from about 10 to 50 % by volume, preferably from about 15 to 40%, from 20 to 35% of cells opened by the perforation.

The opening of a certain number of cells, in the closed-cell foamed material, imparts improved sound-absorbing properties as it creates winding routes for sound waves.

In addition, without wishing to be bound to any interpretative theory, the Applicant believes that the combination of the macrocellular structure with the perforation of the foamed polyolefin material also results in a more rapid and effective heat dissipation, allowing even more advantageously to use these polyolefin materials - per se characterised by inferior thermal properties - as noise reducing materials in place of conventional polyurethane materials, notoriously higher-melting, within the tyre cavity, i.e. in significant thermal and mechanical stress conditions. In addition, the limited number of perforations does not damage the structural strength of the foamed material which, therefore, due to both the type of polymer and to the macrocellular structure after expansion, does not interfere with the sealing performance of the sealing composite.

In the tyre of the present invention, the noise reducing element is preferably used as a single layer or, alternatively, as a coupling of two or more layers, in which case preferably coupled by lamination.

The noise reducing element preferably has a thickness of at least 5 mm, more preferably from 5 to 50 mm, from 7 to 40 mm, even more preferably from 10 to 30 mm.

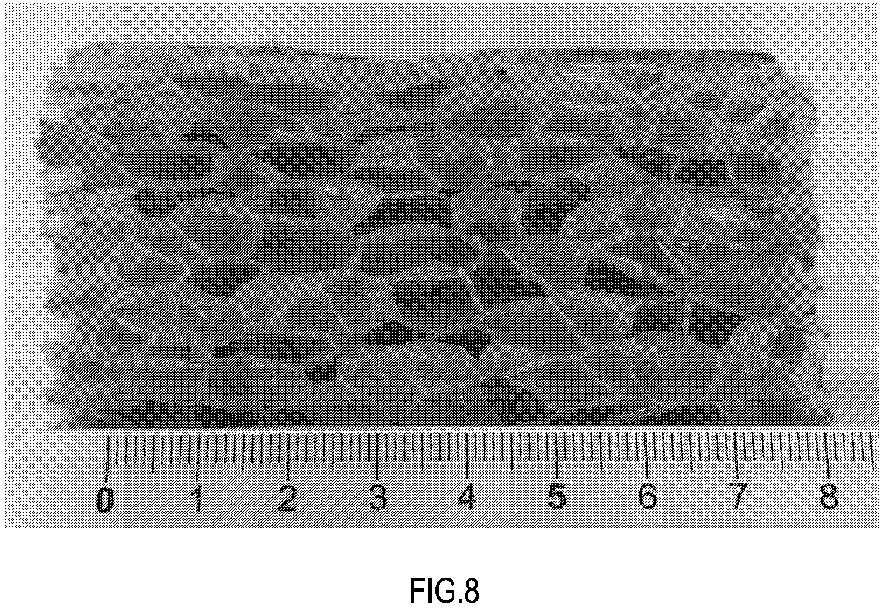

An example of a particularly preferred commercial noise reducing element made of perforated closed macrocell polyethylene is called Stratocell Whisper™, supplied by Sogimi, illustrated herein in Figure 8.

The photograph in Figure 8 allows appreciating the appearance of this sample of Stratocell Whisper and the actual size of its macrocells for direct comparison with the millimetre scale of the ruler.

The noise reducing material is marketed in the form of sheets, usually rectangular, or rolls.

Generally, one of the two main surfaces of the noise reducing material is coated with a layer of suitable adhesive material, protected in turn by a first removable film, while the other surface may or may not have a second protective film. By removal of the first removable film, it is possible to make the noise reducing material adhere to the radially inner surface of the elastomeric sealing composition or, if present, of the self-supporting film of the tyre sealing composite.

However, the adhesive material may not be necessary in the case in which the noise reducing element is applied directly to the radially innermost surface of the elastomeric sealing composition, in the absence of self-supporting film, and the sealing composition has suitable adhesiveness.

Examples of adhesive materials commonly used for these purposes are acrylic adhesives, such as modified pressure-sensitive acrylic adhesives marketed by Tekspan Automotive with the denomination 2C or by Nitto with the name of 5015TP or D5952 or the acrylic adhesives for lamination 9472LE by 3M.

However, other types of adhesives may also be applied, commonly used in the industry, provided they are suitable to ensure the stable adhesion of the noise reducing element to the self-supporting film or the sealing composition. The man skilled in the art is able to select the optimum adhesive considering the chemical nature of the materials to be coupled, i.e. of the noise reducing material and the self-supporting film or sealing composition.

In the tyre according to the present invention, the at least one layer of noise reducing material is applied in a radially inner position with respect to the layer of sealing elastomeric composition or, if present, with respect to the self-supporting film.

In the case of a tyre manufactured by the first process of the invention, before making the noise reducing element adhere to the radially inner surface of the self-supporting film, when present, it is generally convenient to remove any contaminant possibly left from the forming step from such a surface, for example mechanically by rubbing, or chemically, with the aid of solvents and/or detergents or with other suitable (laser) technologies.

In a preferred embodiment, a single layer of noise reducing material is applied.

In another embodiment, two or more layers of noise reducing materials are applied, equal or different from one another, preferably partially or totally superimposed, of which at least the one in contact with the sealing composition or with the self-supporting film, if present, comprises a closed-cell foamed polyolefin material, preferably with closed macrocells, optionally perforated as described above.

In the case of multiple layers, the noise reducing materials are preferably adherent to each other, for example by gluing or lamination and the layer in contact with the sealing composite is a closed-cell foamed polyolefin material, preferably with closed macrocells, optionally perforated, as described above.

In the tyre according to the present invention, the noise reducing element is applied on at least a portion of the radially inner surface of the layer of sealing elastomeric composition or, if present, of the self-supporting film.

Preferably, the noise reducing element is applied on the radially inner surface of the layer of elastomeric sealing composition or, if present, of the self-supporting film, which extends by the entire circumference of the tyre and axially at least at a tread band portion of the tyre, preferably comprised between 10% and 70% of the width of the tread band of the tyre.

Alternatively, the noise reducing element may be applied by a width corresponding to 100% or more of the tread band width, i.e. it may be applied not only on the radially inner surface of the layer of elastomeric sealing composition or, if present, of the film self-supporting, but also on a portion of the radially inner surface of the waterproof elastomeric material not covered by the sealing elastomeric composition or, if present, by the self-supporting film.

Preferably, the noise reducing element is applied on the radially inner surface of the layer of elastomeric sealing composition or, if present, of the self-supporting film which extends axially in a substantially centred position with respect to the equatorial plane of the tyre.

In the tyre according to the present invention, the noise reducing element may be applied on the radially inner surface of the layer of elastomeric sealing composition or, if present, of the self-supporting film and optionally on the radially inner surface of the airtight elastomeric material, as a single strip or as multiple stripes preferably parallel to each other circumferentially or with inclined pattern with respect to the equatorial plane. Such strips may substantially be rectangular portions, having a width preferably less than the cross-sectional width (maximum chord) of the tyre and length equal to or different from each other, preferably comprised between 0.5 and 0.05 of the inner circumferential development of the tyre; such substantially rectangular portions are applied as described above preferably in a substantially centred position with respect to the equatorial plane of the tyre.

Preferably, the number of strips of material is greater than or equal to 1, preferably between 2 and 8, preferably less than 10.

Preferably, the noise reducing element is applied in such a way as to distribute the load as symmetrically as possible, so as not to unbalance the tyre posture. Preferably, the noise reducing element is applied avoiding the overlapping of the end flaps of one or more strips of material.

Preferably, the coating of the inner surface is less than 100% and preferably greater than 40% more preferably greater than 50%, even more preferably greater than 60%, the inner surface being the surface corresponding to the surface of the layer of sealing elastomeric composition or, if present, of the self-supporting film.

The noise reducing element used in the tyre of the present invention, in addition to the ability to cooperate with the sealing elastomeric composition in sealing the perforations and at the same time offer excellent soundproofing performance, has several additional advantages compared to conventional polyurethane materials. In fact, the present polyolefin materials do not have a tendency to easily absorb moisture and therefore are not subject to proliferation of bacteria and mould, with formation of odours. Moreover, unlike polyester-based polyurethanes, they do not undergo hydrolytic degradation. Therefore, as no water accumulates in the inner cavity of the tyre and since they do not decompose by hydrolysis, they do not cause imbalances in the posture that may negatively impact on the driving and passenger comfort, on the performance of the vehicle on the road and, last but not least, on safety. Advantageously, with respect to polyurethane materials, they do not require special storage and transport precautions to protect from moisture nor the use of antifungal agents to prevent the formation of mould. Finally, these polyolefin materials are particularly light.

Therefore, the present polyolefin materials impart advantages in terms of duration, better posture balancing and lower rolling resistance, simplification of the manufacturing and storage procedures of the same and of spare parts to the soundproof tyres comprising them, substantially due to lightness, hydrolytic stability and poor absorption of water, which advantages also translate into a reduction of costs. Unexpectedly, the Applicant has found that these particular macrocellular polyolefin materials do not interfere with the sealing process and are resistant to the conditions of use within the tyre cavity.

The Applicant has mainly focused on applying the invention to tyres for four-wheeled vehicles for road use, as tyres adapted to equip medium and high powered cars for transporting people (maximum chord size from 195 mm to 245 mm). The Applicant believes that the invention is also adapted for tyres for small cars or high-performance tyres (HP high performance - UHP ultra high performance) with maximum chord size, for example, of from 145 mm to 355 mm, or tires tyres for various vehicles such as motorcycles or heavy load vehicles for transporting people or property.

The soundproof self-sealing tyre may be an HP (High Performance) or UHP (Ultra High Performance) tyre intended for equipping vehicles for the transport mainly of people, such as Sedan, Minivan, family, SUVs (Sport Utility Vehicles) and/or CUVs (Crossover Utility Vehicles), typically tyres that allow driving at high speeds.

The high and ultra-high performance tyres are in particular those which allow to reach speeds higher than at least 160 km/h, higher than 200 km/h up to over 300 km/h. Examples of such tyres are those belonging to the classes "T", "U", "H", "V", "Z", "W", "Y" according to the E.T.R.T.O. (European Tyre and Rim Technical Organisation) standards, in particular for four-wheel high-power vehicles. Typically, the tyres belonging to these classes have a section width equal to 185 mm or greater, preferably not greater than 325 mm, more preferably of between 195 mm and 325 mm. These tyres are preferably mounted on rims having seating diameters equal to or larger than 15 inches, preferably not larger than 24 inches, more preferably of between 17 inches and 22 inches. By SUV and CUV it is meant vehicles with raised distribution, typically four-wheel drive, typically having a displacement greater than or equal to 1800 cc, more preferably of between 2000 cc and 6200 cc. Preferably, these vehicles have a mass greater than 1,400 kg, more preferably of between 1500 Kg and 3000 Kg.

The tyre of the invention can be used as a summer or winter or "all-season" (tyres usable in all seasons) tyre.

Further features and advantages will appear more clearly from the detailed description of a preferred but non-exclusive embodiment of a soundproof tyre according to the present invention.

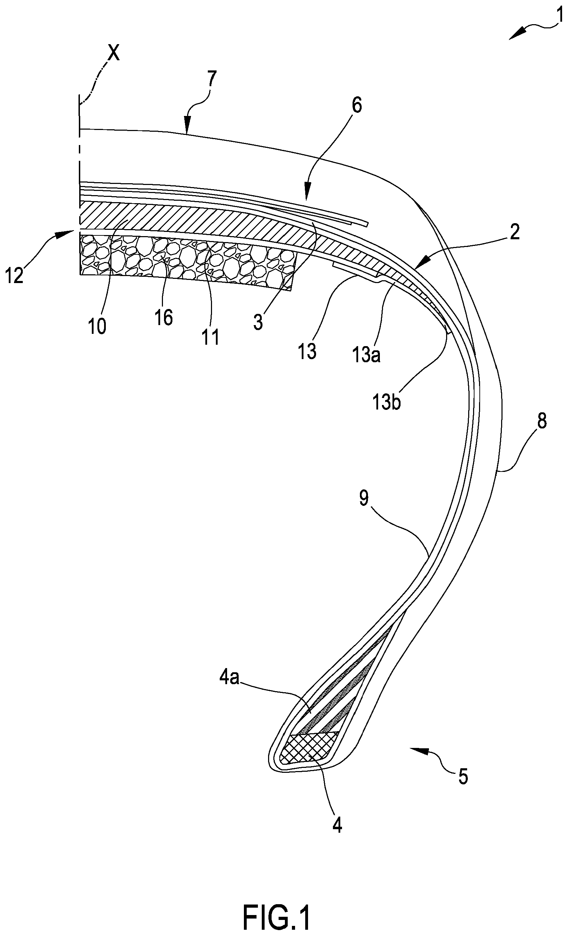

Such description is given hereinafter with reference to the drawing in Figure 1, provided by way of illustrative and, therefore, non-limiting purpose.

In figure 1, reference numeral 1 designates a soundproof self-sealing tyre for vehicle wheels, which generally comprises a carcass structure 2 comprising a carcass ply 3 having respectively opposite end flaps engaged with respective annular anchoring structures 4, optionally associated with elastomeric fillers 4a, integrated in the areas 5 usually identified by the name of "beads". The at least one carcass ply 3 comprises a plurality of textile or metal reinforcement cords arranged parallel to each other and at least partially covered with a layer of elastomeric material.

The carcass structure 2 may be associated with a belt structure 6 comprising one or more belt layers placed in radial superposition with respect to one another and with respect to the carcass ply 3, having textile or metal reinforcement cords. Such reinforcement cords may have crossed orientation with respect to the circumferential development direction of tyre 1.

A tread band 7 is applied in a position radially outer to the belt structure 6, made of an elastomeric composition like other semi-finished products making up tyre 1.

Respective sidewalls 8 of an elastomeric composition are further applied in axially outer position on the lateral surfaces of the carcass structure 2, each extending from one of the lateral edges of the tread band 7 up at the respective annular anchoring structure to beads 5.

Moreover, a radially inner surface of tyre 1 is preferably internally lined by a layer of substantially airtight elastomeric material, or so-called liner 9.

In the embodiment shown in figure 1, tyre 1 is of the type for motor vehicles.

The belt structure 6 may further comprise at least one radially outer layer comprising textile or metal cords or textile/metal combinations, arranged according to a substantially zero angle with respect to the circumferential development direction of the tyre.

According to alternative embodiments of the present invention, the soundproof self-sealing tyre is intended to be used for motorcycles or heavy load vehicles.

The soundproof self-sealing tyre 1 according to the invention further comprises a layer of sealing composition 10 arranged at the tread band (or at a crown area) of tyre 1 and in a radially inner position with respect to liner 9. The layer of sealing composition 10 extends by the entire circumferential development of tyre 1. The layer of sealing composition 10 preferably has a maximum thickness substantially at the equatorial plane "X" of the finished tyre 1, i.e. moulded and vulcanised, and tapers towards the axial ends of the tread band (figure 1). In a radially inner position with respect to the layer of sealing composition 10 and in contact with said layer of sealing composition 10 is optionally arranged a self-supporting thermoplastic film 11 made of polyamide (nylon) or polyolefin. The self-supporting thermoplastic film 11 extends, as the layer of sealing composition 10, by the entire circumferential development of tyre 1 and has a width, i.e. an axial extension, just smaller than the axial extension of said layer 10.

The layer of sealing composition 10 and the self-supporting thermoplastic film 11 for a sealing composite 12. The sealing composite 12, when a sharp element (such as a nail) penetrates into the tyre and through the layer of sealing composition 10 and the self-supporting thermoplastic film 11, is able to adhere to the object penetrated therein and can also flow into the hole when such an object is removed, thus sealing the hole itself and preventing the escape of air from the tyre. The sealing composite 12 is easily perforated by the sharp element while maintaining such deformability and tackiness as to contribute to the transfer of the sealing composition while ejecting the sharp element.

Tyre 1 further preferably comprises two elongated elements of elastomeric material 13, each arranged at a circumferential edge of the sealing composite 12. An axially inner portion 13a of each elongated element of elastomeric material 13 is preferably superimposed to the sealing composite 12 and is arranged in a radially inner position within said sealing composite 12. An axially outer portion 13b of each elongated element of elastomeric material 13 lies in contact with liner 9. Axially inner portion 13a means a portion closer to equatorial plane "X" of tyre 1 with respect to the axially outer portion 13b.

More in detail, the radially inner portion 13a in turn preferably has an axially inner zone directly applied on the self-supporting thermoplastic film 11 and an axially outer zone directly applied on a surface of the layer of sealing composition 10. In fact, the layer of sealing composition 10 preferably has an axial development greater than the axial development of the self-supporting thermoplastic film 11. It follows that every elongated element of elastomeric material 13 is in contact with both the layer of sealing composition 10 and with the self-supporting thermoplastic film 11.

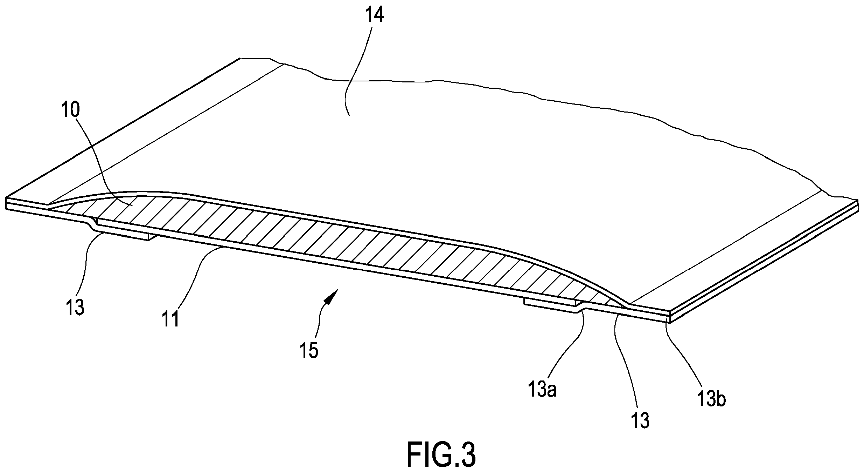

In Figure 3, the sealing composition 10 is covered with a second removable protective film 14 to give the multilayer sealing composite 15. The multilayer sealing composite 15 may be prepared, for example by extrusion of the sealing composition 10 on the second protective film 14 and mechanical coupling with the self-supporting thermoplastic film 11 and the lateral elongated elements 13 to give the ribbon-like composite, which is cooled and usually stored wrapped in reels.

Tyre 1 finally comprises a layer of noise reducing material or element 16, comprising a closed-macrocell foamed polyolefin material, preferably perforated, applied on the radially inner surface of the self-supporting film 11, for example by gluing, by the entire circumference of the tyre and axially at about 60% of the width of the tread band of the tyre, symmetrically with respect to the equatorial plane X.

The noise reducing element or layer 16 may be made to adhere to the radially inner surface of the self-supporting film 11 by gluing with suitable adhesives, such as an acrylic adhesive, or by interlocking or compression, making the noise reducing layer larger than the inner diameter of the tyre. If film 11 is absent, layer 16 can adhere to the layer of sealing composition 10 either directly or with a suitable adhesive.

Building a green precursor of tyre 1, comprising the sealing composite 12 but not yet the noise reducing element 16, is preferably implemented by assembling respective semi-finished products on one or more forming supports, not shown.

The carcass structure and the belt structure are generally made separately of each other in respective work stations, to be mutually assembled at a later time.

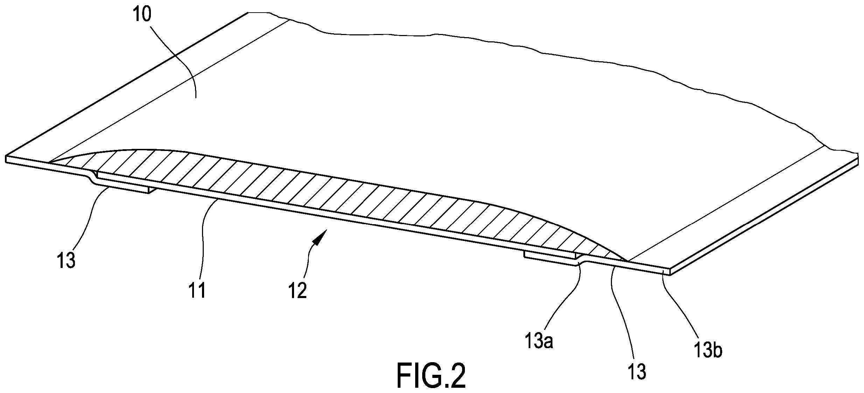

More specifically, according to the "built-in" process, the manufacture of the carcass structure first provides the formation of the sealing composite 12 as a continuous tape comprising the layer of sealing composition 10 arranged on and supported by the self-supporting thermoplastic film 11 combined with the elongated elements of elastomeric material 13 associated with longitudinal opposite edge of the above sealing composite 12 (figure 2).

The sealing composite 12 provided with the respective elongated elements of elastomeric material 13 is cut to size, preferably with bevel and wrapped around a radially outer surface of a building drum, keeping the thermoplastic film 11 in radially innermost position. Opposite end flaps of the sealing composite 12 are mutually joined by the effect of adhesiveness of the sealing composition; preferably, the joint is covered (to prevent the escape of sealing composition during the vulcanisation) and consolidated, for example by means of adhesive tape (joint). Preferably, the above adhesive tape is implemented by coupling of an adhesive to a self-supporting thermoplastic film similar or equal to the one used in the sealing composite itself, preferably an "adhesive thermoplastic film" will be used. This eliminates a stress concentration at the edge of the adhesive thermoplastic film itself, and reduces the chance of detachment of the adhesive thermoplastic film after shaping, and of local tear of the self-supporting film close to the edge of the adhesive thermoplastic film, as might happen instead in the case of a generic adhesive tape, typically much more rigid than the thermoplastic film. The adhesives that may be used are for example the adhesive manufactured by 3M under the name of 9472 LE, or the adhesive manufactured by NITTO under the name 5015T.

Liner 9 and the carcass ply or plies 3 are applied on the sealing composite 12 to form a so-called "carcass sleeve", typically substantially cylindrical. The annular anchoring structures 4 to beads 5 are fitted or formed on the opposite end flaps of the carcass ply or plies 3, which are then looped back around the annular structures 4 themselves so as to enclose them in a sort of loop.

A so-called "outer sleeve" is manufactured on a second drum or auxiliary drum, comprising the belt layers 6 applied in reciprocal mutual superimposition, and optionally the tread band 7 applied in a radially outer position to the belt layers 6. The outer sleeve is then picked up from the auxiliary drum to be coupled to the carcass sleeve. To this end, the outer sleeve is arranged coaxially around the carcass sleeve, after which the carcass ply or plies 3 is/are shaped according to a toroidal configuration by mutual axial approach of beads 5 and concurrent introduction of fluid under pressure into the carcass sleeve, so as to cause a radial expansion of the carcass plies 3 up to make them adhere against the inner surface of the outer sleeve.

The assembly of the carcass sleeve with the outer sleeve can be carried out on the same drum used to make the carcass sleeve, in which case it is called "single step building process" or "unistage process". Building processes of the so-called "two-step" type are also known, in which a so-called "first-step drum" is first used to make the carcass sleeve, while the assembly between the carcass sleeve and the outer sleeve is carried out on a so-called "second-step drum" or "shaping drum", on which the carcass sleeve picked up from the first-step drum and then, the outer sleeve picked up from the auxiliary drum are transferred.

After building of green tyre, a moulding and vulcanisation treatment is generally carried out in order to determine the structural stabilisation of the tyre through cross-linking of the elastomeric compositions, as well as to impart a desired tread pattern on the tread band 7 and to impart any distinguishing graphic signs at sidewalls 8. A pattern of covalent bonds develops during vulcanisation between the elastomer macromolecules of the sealing composition which, depending on its density, prevents flowing thereof, making the material more and more insoluble, non-melting and elastic. After vulcanisation, the layer of sealing composition 10 achieves optimal deformability, tackiness and cohesion features.

Alternatively, the sealing composite 12 may be applied to the radially innermost surface of the partially or completely vulcanised tyre and optionally be subjected to subsequent heat and/or chemical consolidation treatments.

Alternatively, a sealing composition 10 may be applied to the radially innermost surface of the partially or completely vulcanised tyre and optionally be subjected to subsequent heat and/or chemical consolidation treatments.

Finally, a strip of noise reducing material 16 is applied by gluing to the vulcanised tyre comprising the finished sealing composite 12 or the sealing composition 10 alone, after cutting it to length, removing any protective film (not shown) from the adhesive surface and, if necessary, cleaning the radially inner surface from any self-supporting film 11 with suitable means, such as by rubbing with sponges soaked in soapy water or by laser cleaning.

The manufacturing process of the present soundproof self-sealing tyre according to the invention, in the variants described above and cited hereinafter as first and second process, preferably provides for using the preferred noise reducing materials and application methods described above in relation to the soundproof self-sealing tyre according to the invention.

According to the selected process, the man skilled in the art is able to select the elastomeric sealing composition suitable for having the desired sealing performance in the soundproof self-sealing tyre of the invention, considering that in the first process, the composition is applied, with or without self-supporting film, in the finished tyre and not subjected to vulcanisation (post-treated), while in the second process, it is applied together with the self-supporting film in the green tyre and vulcanised (built-in) with it.

In particular, in the first process the elastomeric sealing composition, once applied with various techniques (e.g. by spraying or coating and the like) on the tyre liner is not subjected to vulcanisation at the typical temperatures of 140-190 °C but at most to consolidation reactions at low temperature (50-100 °C) to impart it the desired flexibility.

An example of "post-treatment" preparation of self-sealing tyres is described in US4418093.

In the case of "built in", the sealing elastomeric composition for use in the green tyre can have already quite high fluidity and tackiness - in this case, it will be consolidated only during the vulcanisation - or it may even be more rigid and compact than necessary for final use, thus requiring a partial depolymerisation and fluidisation to achieve optimum sealing performance.

An example of "built-in" preparation of self-sealing tyres is described in WO2011064698 on behalf of the Applicant.

Elastomeric sealing compositions suitable in the case of the first process are described, for example, in patent application WO2009/059709.

Elastomeric sealing compositions suitable in the case of the second process are described, for example, in patent application WO2009143895 and in the present experimental part.

According to the second process of invention, in order to manufacture a soundproof self-sealing tyre for vehicle wheels, step i) of providing a vulcanised and moulded self-sealing tyre comprises at least
a) forming a green tyre on a forming drum comprising a carcass structure, a tread band applied in a radially outer position to said carcass structure, a layer of airtight elastomeric material (liner) applied in a radially inner position to said carcass structure, a layer of elastomeric sealing composition applied on at least a portion of the radially inner surface of the layer of airtight elastomeric material and extending axially at least at a part of tread band, and a self-supporting film, applied on the radially inner surface of the layer of sealing composition;
b) arranging an expandable vulcanisation chamber;
c) expanding said expandable chamber within said green tyre so as to shape, mould and vulcanise the green tyre, so as to obtain a vulcanised and moulded self-sealing tyre.

The optional cleaning operation iv) of the present process is generally carried out in cases in which the tyre provided in step i) is contaminated on the radially inner surface of the self-supporting film by lubricants or oils or emulsions and anti-adhesive solutions applied thereon during the shaping of the same.

The presence of these contaminants generally does not allow the noise reducing element to be applied on the inner surface of the self-supporting film with an adequate adhesion to withstand subsequent stresses during use, even employing highly adhesive glues, which are expensive and difficult to handle.

In this case, in order to obviate these problems, it is preferred to proceed with the cleaning operation, at least on the part of the radially inner surface of the self-supporting film concerned by the application of the noise reducing element.

Cleaning can be carried out according to any suitable method, both by mechanical removal with sponges, rags or brushes and by dissolution of contaminants with suitable solvents or combinations thereof.

In the absence of self-supporting film, the operation of making the surface of the noise reducing element adhere to at least a portion of the radially inner portion of the layer of elastomeric sealing composition (vi), after vulcanisation, is preferably carried out without the use of adhesives, simply by pressure, due to the adhesive properties of the elastomeric sealing composition itself.

Alternatively, the adhesive can be applied on at least a portion of the surface that in the finished tyre will be the radially outer surface of the noise reducing element and optionally, also on at least a portion of the radially inner surface of the layer of sealing composition, or on both, in corresponding or non-corresponding portions.

In the presence of self-supporting film, the operation of adhering the surface of the noise reducing material to a portion, optionally cleaned, of the radially inner surface of the self-supporting film (vi) is carried out with the use of adhesives. The adhesive can be applied on at least a portion of the surface that in the finished tyre will be the radially outer surface of the noise reducing element and/or on at least a portion, optionally cleaned, of the radially inner surface of the self-supporting film, in corresponding or not corresponding portions.

The gluing of the noise reducing element is carried out using adhesives or glues suitable for the purpose, preferably acrylic adhesives.

Preferably, as they are commercially available, noise reducing materials in the form of sheets or rolls are used, already provided with an additional layer of adhesive material deposited on one of the main surfaces, adhesive layer that is suitably protected by a first removable film.

For the application, after having optionally cut the noise reducing material to size, the first protective film is removed from the adhesive layer and it is applied on the desired surface portion of the sealing composition or of the self-supporting film by pressure, either manually or with suitable automated systems.

The noise reducing material is typically marketed with a further (second) removable protective film arranged on the other main surface, the one not covered by the adhesive. This second film, which mainly performs functions of protection of the foamed noise reducing material, generally consists of a thermoplastic film.

In soundproof self-sealing tyre according to the present invention, this second film may be left adhering or preferably removed after applying the noise reducing element.

The Applicant has noted that generally, the acoustic performance of the tyre according to the invention is better when this second film of the noise reducing material is removed.

The following examples are now provided for merely illustrative and non-limiting purposes.

### EXAMPLES

In order to assess the cavity noise attenuation and self-sealing performance of the tyres of the present invention compared to comparative tyres, sample tyres were prepared by applying strips of noise reducing materials on the inner surface of the self-supporting film of finished vulcanised self-sealing tyres as described in more detail hereinafter.

The acoustic performance was then measured by acoustic tests conducted both on the tyre mounted on the rim (percussion test or Hammer test) and on the tyre mounted on a car, with indoor assessments (tests in semi-anechoic chamber) and on the road (interior noise measurement and tester's evaluation). Finally, the sealing performance was evaluated in the dynamic sealing test.

### Preparation of sample tyres

Self-sealing tyres Scorpion™ Verde manufactured by the Applicant were used (comparative sample 1) having size 235/55R18 prepared by assembling all green components, except for the noise reducing element, and subsequent shaping and vulcanisation.

In particular, green tyres were prepared by applying the sealing composite (sealing elastomeric composition and self-supporting film as described hereinafter) in radially inner position to the liner at the tread band (as shown in Fig. 1).

The layer of sealing elastomeric composition prior to shaping had a thickness of about 5.0 mm.

The composition shown below in the following Table 2 was used as sealing elastomeric composition:

**Table 2**

| Components | Phr |
|---|---|
| IR | 60 |
| SBR 1502 | 30 |
| SBR 1009 | 10 |
| Luperox 101 XL45 | 0.56 |
| Process oil | 45 |
| 6-PPD | 2 |
| Escorez® 1102 | 40 |
| Struktol® 40MS | 7 |
| N326 | 12 |

wherein IR is a cis-1,4-polyisoprene elastomer manufactured by Nizhnekamskneftechim Export, Russia; SBR 1502 is a styrene-butadiene elastomeric copolymer manufactured by Lanxess and marketed as Buna SE 1502; SBR 1009 is a pre-crosslinked butadiene-styrene elastomeric polymer manufactured by a hot emulsion polymerisation process by Lion Polymers; Luperox 101 XL45 is a peroxide manufactured by Arkema; process oil is (MES - mild extraction solvates), mineral base oil highly refined with solvent and/or by hydro-treatment (Catenex SNR manufactured by Shell); Escorez® 1102 is an aliphatic tackifying resin manufactured by ExxonMobil; 6-PPD is N-(1,3-Dimethylbutyl)-N'-phenyl-p-phenylenediamine, antioxidant and antiozonant manufactured by Eastman; Struktol® 40MS is a mixture of aromatic aliphatic-naphthenic hydrocarbon resins (Struktol Corporation); N326 is carbon black manufactured by Birla.

The sealing elastomeric composition according to the formulation in table 2 was used to prepare by extrusion a sealing composite having a total thickness of about 5.1 mm, comprising a removable protective film made of silicon polyester, lateral rubber elongated elements sized 25 x 1 mm and the self-supporting film of Nylon sized 18 nominal microns (Filmon CXS18).

The sealing composite was applied directly on the building drum after removing the protective film.

### Preparation of self-sealing and soundproof tyres

After shaping and vulcanisation under standard conditions, the radially innermost surface of the tyre, i.e. the inner surface of the self-supporting film of Nylon was cleaned with a soft abrasive sponge soaked in soapy water to remove any contamination.

A single of the selected noise reducing material was applied on the surface of the self-supporting film thus cleaned through a layer of acrylic adhesive. The other surface of the noise reducing element, not adhesive, was covered with a removable protective plastic film.

The noise reducing element covered the inner surface of the sealing composite by the entire circumference, symmetrically with respect to the equatorial plane.

The sealing composite comprising the sealing elastomeric composition as shown in table 2, and the self-supporting film made of Nylon, after shaping, had an overall thickness of about 3.6 mm.

The following Table 3 summarises the constitutive features of the sample tyres, both comparative (C1-C2) and according to the invention (INV1-INV3):

**Table 3**

| Sample no. | C1 | C2 | INV1 | INV2 | INV3 |
|---|---|---|---|---|---|
| Sealing composite | Yes | Yes | Yes | Yes | Yes |
| Noise reducing element | No | Yes | Yes | Yes | Yes |
| Type | -- | B | A | A | A |
| Density Kg/m³ | -- | 38 ² | 25¹ | 25¹ | 25¹ |
| No. of Cells / 25 mm | | >40 | ³ <10 | ³ <10 | ³ <10 |
| Average cell size (mm) | -- | <1.5 | >1.5 | >1.5 | >1.5 |
| Width / Thickness (mm) | -- | 180/ 20 | 90/ 10 | 90/ 20 | 180/ 20 |
| Second film | -- | No | Yes | Yes | No |

| | | | | | |
|---|---|---|---|---|---|
| Key: A: polyethylene, closed macrocells, double perforation; B: polyurethane, open microcells; 1=Density test ASTM D3575-08 Suffix W, 2= Density test ISO 1855; 3= Test cell number: BS 4443/1 Met.4. | | | | | |

### Soundproofing performance evaluation

The soundproofing performance of the sample tyres were compared, comprising respectively:
- the sealing composite as defined above and no noise reducing element (comparative C1 - tyre Scorpion™ Verde);
- the sealing composite as defined above and the open microcell polyurethane noise reducing element B (comparative sample C2);
- the sealing composite as defined above and the perforated closed macrocell polyethylene noise reducing element A (samples according to the invention INV1, INV2 and INV3).

The noise reducing element A was of a closed-macrocell polyethylene material, with double perforation; density of 25 Kg/m³ measured according to ASTM D3575-08 Suffix W; Cells/25 mm < 10 according to BS 4443/1 Met.4; thickness of 10 or 20 mm, sold by Sogimi under the trade name of Stratocell Whisper® (Figure 8). This noise reducing element had a first surface, covered with an adhesive and first protective film, and a second surface, covered directly by a second protective film. In samples INV1 and INV2, the second protective film was maintained while it was removed in sample INV3.

The noise reducing element B was made of an open microcell polyurethane material PL38LWF (Tekspan Automotive), density of 35-41 Kg/m³ (ISO 1855), number of cells/25 mm >40, thickness of 10 or 20 mm.

### Phonometric tests

### Percussion test (Hammer test)

This internal test, basically of quality type, is used for a preliminary selection of materials according to their effectiveness in dampening cavity noise.

The soundproof self-sealing tyres of samples INV1-3 according to the invention (with polyethylene noise reducing material A) and the comparative, non soundproof one C1 (without noise reducing element) were mounted on a rim 9JX20 E.T.R.T.O. and inflated to the pressure of 2.6 bar.

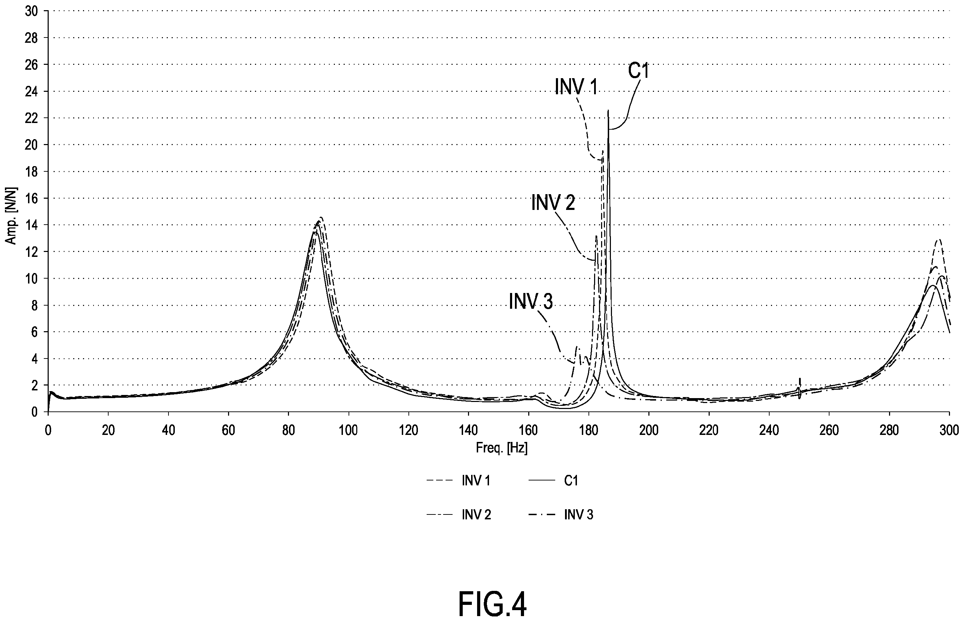

Each tyre, without load, was beaten with dynamometric hammer and the amplitudes of the sounds produced at the various frequencies by the percussion were recorded along axis X and shown in the diagram in figure 4.

As can be seen in from the graphs, the cavity resonance phenomenon occurs with a series of peaks approximately between 170 and 200 Hz.

The intensity of the resonant peak of tyre C1, lacking noise reducing element, at about 190 HZ was dampened for all samples of the invention INV1-3 proportionally to the thickness of noise reducing element. There was also a significant increase in the noise reducing activity for the sample devoid of both protective films (sample INV3), which at a thickness of 20 mm showed the best damping activity among the samples tested.

### Measurement of noise inside the car in semi-anechoic chamber

This test compares the noise damping performance of soundproof self-sealing tyres according to the invention (sample INV3) compared with comparison tyres without noise reducing materials C1, or comprising conventional polyurethane materials C2, in semi-anechoic chamber.

The tyres under evaluation were mounted on rims 9JX20 E.T.R.T.O., inflated to the pressure of 2.6 bars and mounted on a car.

For each set of tyres, the intensity of the noise inside the car was measured with increasing speed, between 20 and 150 Km/h. Official testing of car manufacturers evaluate the performance of cavity noise damping of tyres at speeds generally ranging between 40 and 80 Km/h, since at speeds below or above this range, other noise generation phenomena are involved which make the measurements not very significant.

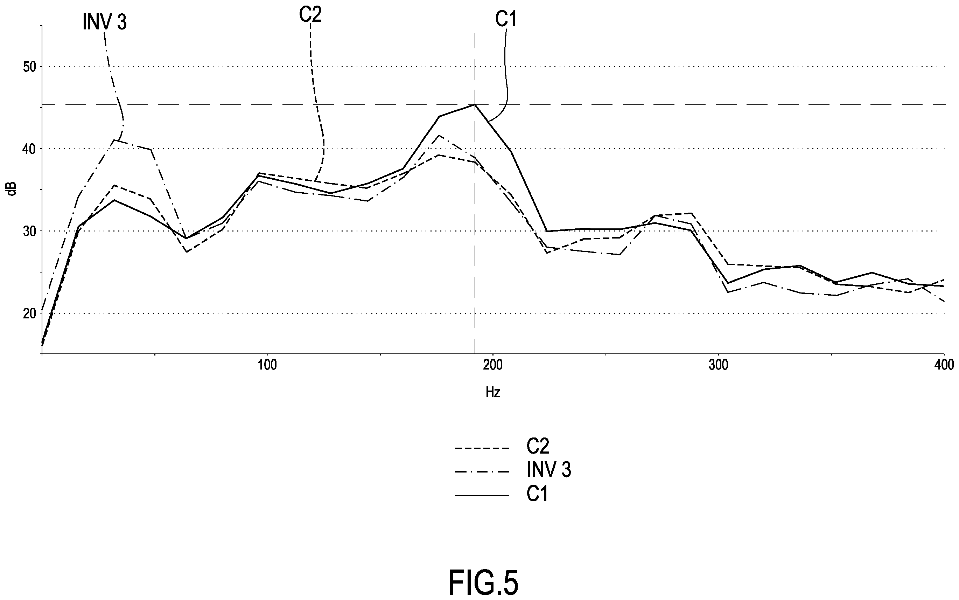

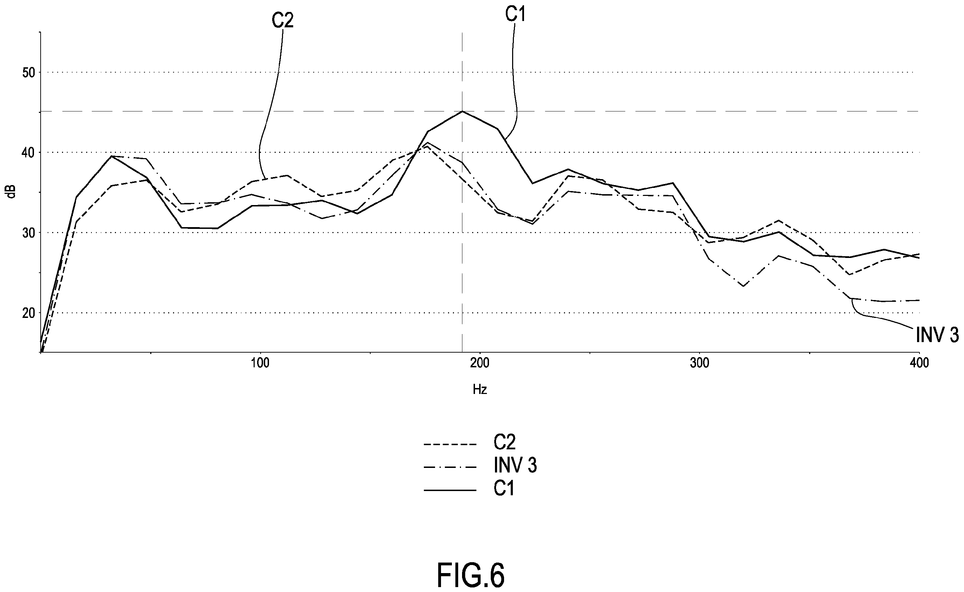

Figures 5 and 6 show the sound intensity curves measured inside the vehicle compartment for the different tyres being evaluated with respect to frequencies, at speeds of 65 and 80 Km/h, respectively.

As can be seen, at the frequency of the cavity resonance peak (C1 at about 190 Hz), the self-sealing tyre INV3 shows a noise damping effectiveness comparable to that of the tyre comprising a conventional polyurethane noise reducing material C2. Therefore, this test shows that the soundproof self-sealing tyres of the present invention, advantageous for the stability to hydrolysis and non-hygroscopicity of the noise reducing materials, are at least comparable in terms of acoustical performance with respect to comparative soundproof tyres comprising conventional polyurethane materials.

### Compartment noise measurement on the road

This test compares the noise damping performance on the road of the self-sealing tyre INV3 according to the invention compared with comparison tyres, without noise reducing element (C1), or comprising conventional polyurethane materials (C2).

The tyres being evaluated were mounted on rims 9.0 Jx20, inflated to the pressure of 2.3 - 2.5 bars and mounted on a VW Touareg 3.0 TD car.

The car was brought to a speed of about 80 Km/h, on a rough asphalt track at 9-13 °C, after which the engine was switched off and the noise in the passenger compartment was measured and evaluated by the test rider, until the car stopped. The measurement of noise in the passenger compartment was carried out by placing microphones at the centre of the car (right channel) and on the window side (left channel), at speeds of the car between 40 and 80 Km/h and at frequencies of from 0 to 22000 Hz.

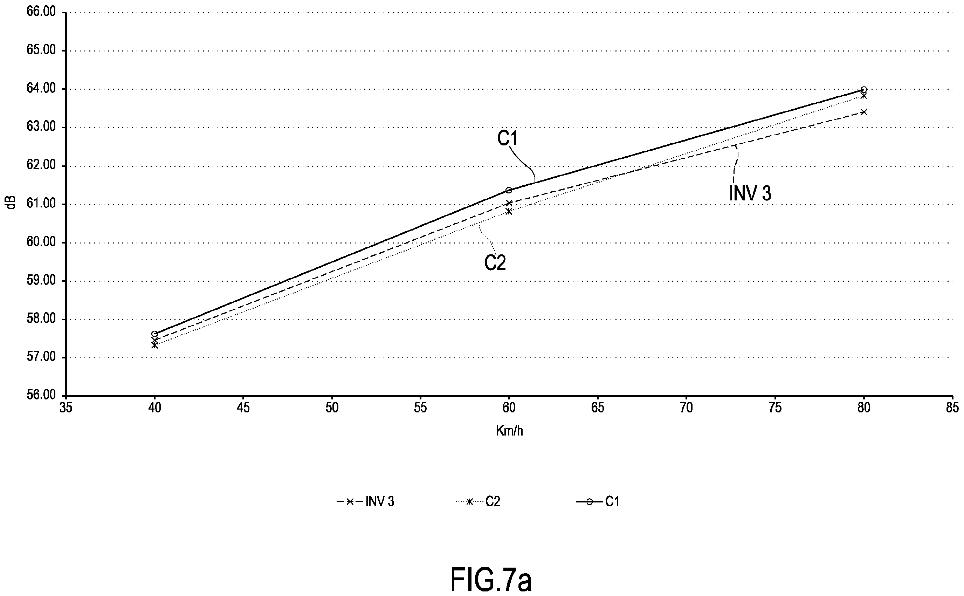

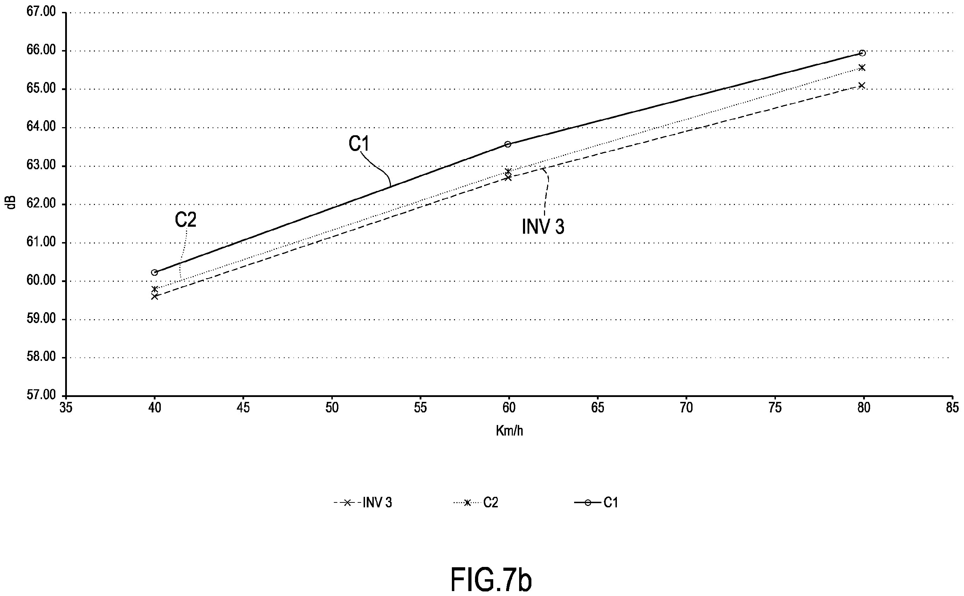

As can be seen in Figures 7a and 7b, the noise measured in the two different locations inside the compartment (Fig. 7a centre of the car, Fig. 7b window side) increases with speed.

The graphs show that the self-sealing tyre INV3, according to the invention, is at least equally if not more effective in reducing noise in the compartment than soundproof tyres comprising conventional open-microcell polyurethane materials (C2).

The following tables 4 and 5 show the intensity of sound measured at the peak frequency of about 190 Hz and at speeds of 60 and 80 Km/h, respectively, in the two positions inside the passenger compartment of the car for the various tyres being evaluated:

**Table 4: speed 60 Km/h**

| Sample | Centre of car (dB) | Window side (dB) |
|---|---|---|
| INV3 | 61.0 | 62.7 |
| C1 | 61.4 | 63.6 |
| C2 | 60.8 | 62.9 |

**Table 5: speed 80 Km/h**

| Sample | Centre of car (dB) | Window side (dB) |
|---|---|---|
| INV3 | 63.4 | 65.1 |
| C1 | 64.0 | 66.0 |
| C2 | 63.8 | 65.6 |

This data show that the soundproof self-sealing tyres according to the present invention (sample INV3) in general have a noise damping efficacy at least equal if not higher than the one shown by the conventional polyurethane materials (comparative tyres C2).

More in particular, the data on measurements at speeds of 60 and 80 Km/h show that the perforated macrocell polyethylene materials used in these tests have a cavity noise reduction capacity even better than traditional polyurethane materials.

### Test driver's evaluation of road noise

The test driver of the car, in the driving conditions described above, expressed the following opinion on the noise level perceived in the passenger compartment:

**Table 6**

| Tyre | Noise level | Notes |
|---|---|---|
| INV3 | + | Generally similar to or slightly better than C2 |
| C1 | +++ | The noise is annoying, discontinuous and penetrating |
| C2 | ++ | Shifting from 80 Km/h to slower speeds, the cavity noise increases while remaining acceptable |

| | | |
|---|---|---|
| Noise level: +++ high; +medium; + medium-low; | | |

Also from the car test driver's opinion it is possible to conclude that the self-sealing tyre according to the invention shows sound-absorbing performance comparable if not improved over soundproof tyres comprising conventional polyurethane materials.

### Evaluation of the noise reducing material duration

A tyre 275/45 R20 110W according to the invention (sample INV3), inflated to a pressure of 3.0 bar was subjected to a fatigue test indoors, which consisted in rotating it at a constant speed of 80 Km/h, at a temperature of 25 °C, at a constant load of 1380 Kg, on a 2.0 m diameter road for 400 hours, verifying at 80-hour intervals the integrity of the noise reducing layer after stopping and removing the tyre. The tyre according to the invention INV3 showed no intermediate signs of deterioration and exceeded the predetermined 400 hours without detachments or damage to the noise reducing layer.

### Evaluation of the acoustic performance of noise reducing materials after fatigue test

The soundproof self-sealing tyre according to the invention (sample INV3) was subjected, before and after the fatigue test in semi-anechoic chamber described above, to the measurement of sound performance.

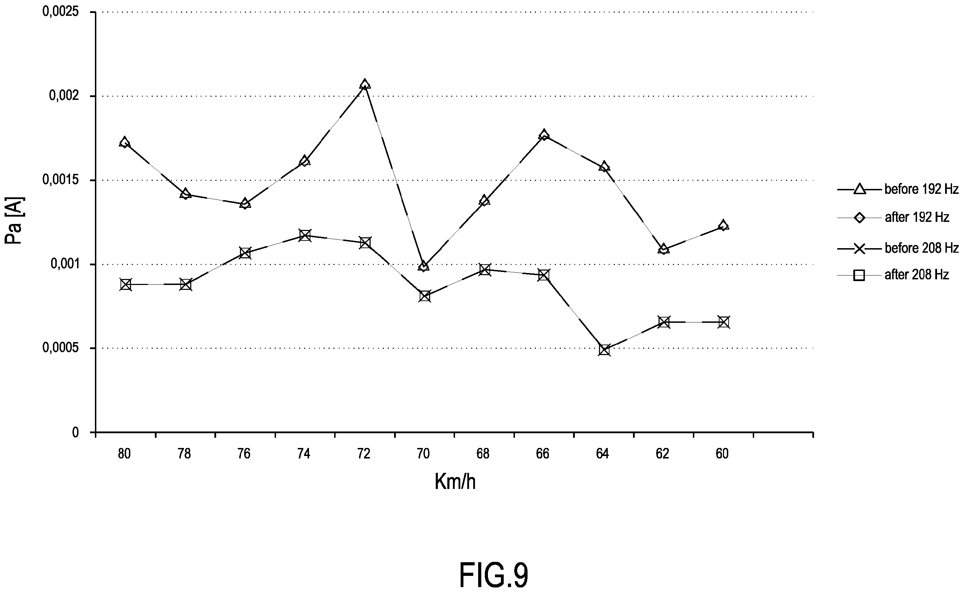

Figure 9 shows the noise charts - measured in Pa according to the weighing curve "A" more similar to the human ear - produced by the self-sealing tyre INV3 according the invention at frequencies of 192 and 208 Hz, and in the range of speeds from 80 to 60 Km/h before and after the fatigue test. As shown by the overlapping curves, the noise reducing element surprisingly maintained the same soundproofing activity after 400 hours of rolling.

### Sealing tests

The comparative sample tyres C2 and according to the invention INV3 were mounted on standard rims and inflated to the pressure of 2.4 bar.

### Dynamic sealing tests

3, 4, 5 mm diameter nails (12 per type), having a length of 40 mm, were driven in the tread of tyres comprising, respectively:
- self-sealing composite with about 18 microns thick polyamide film and 3.6 mm sealing composition as per Table 2 and no noise reducing element (comparative C1);
- self-sealing composite with about 18 microns thick polyamide film and 3.6 mm sealing composition as per Table 2 and polyurethane noise reducing material B (comparative C2);
- self-sealing composite with about 18 microns thick polyamide film and 3.6 mm sealing composition as per Table 2 and perforated closed-macrocell polyethylene noise reducing material A according to the invention (INV3).

The perforated tread area corresponded to the belts. The arrangement of the nails included blocks and recesses was circumferentially random.

The covers were set rolling, with nails driven in, on a so-called "road wheel", a disc with a diameter of 2.8 m, at a speed of 120 km/h with a load of 550 kg.

500 km were travelled, alternating 10 minute periods with zero drift angle and 10-minute periods with drift angle oscillating between -6° and +6°. The drift velocity was 1°/s: 25 oscillations were carried out for each drift cycle.

The tyres did not lose air throughout the test period.

The driven nails were extracted and the air escape from the holes verified with a solution of soapy water, and given in tables 7 and 8.

Immediately after, another 20 km were travelled with 550 kg load and drift angle oscillating from -2° to +2°. The air escape from the holes was evaluated again, giving the results in tables 7 and 8, both in terms of absolute numbers of seals and in percentage.

**Table 7**

| Comparative C1 | Sealing at 500 km | | | Sealing at 500 + 20 Km | | |
|---|---|---|---|---|---|---|
| diameter for nails driven mm | 3 | 4 | 5 | 3 | 4 | 5 |
| no. of nails driven | 12 | 12 | 12 | 12 | 12 | 12 |
| no. holes sealed after extraction | 12 | 12 | 9 | 12 | 12 | 10 |
| % sealing | 100 | 100 | 75 | 100 | 100 | 83 |

| Comparative C2 | Sealing at 500 km | | | Sealing at 500 + 20 Km | | |
|---|---|---|---|---|---|---|
| diameter for nails driven mm | 3 | 4 | 5 | 3 | 4 | 5 |
| no. of nails driven | 12 | 12 | 12 | 12 | 12 | 12 |
| no. holes sealed after extraction | 9 | 3 | 3 | 9 | 4 | 2 |
| % sealing | 75 | 25 | 25 | 75 | 33 | 17 |

Comparative C1: film PA + sealant + no noise reducer; Comparative C2: film PA + sealant + open microcell polyurethane noise reducing material.

**Table 8**

| Comparative C1 | Sealing at 500 km | | | Sealing at 500 + 20 Km | | |
|---|---|---|---|---|---|---|
| diameter for nails driven mm | 3 | 4 | 5 | 3 | 4 | 5 |
| no. of nails driven | 12 | 12 | 12 | 12 | 12 | 12 |
| no. holes sealed after extraction | 12 | 12 | 9 | 12 | 12 | 10 |
| % sealing | 100 | 100 | 75 | 100 | 100 | 83 |

| Invention INV3 | Sealing at 500 km | | | Sealing at 500 + 20 Km | | |
|---|---|---|---|---|---|---|
| diameter for nails driven mm | 3 | 4 | 5 | 3 | 4 | 5 |
| no. of nails driven | 12 | 12 | 12 | 12 | 12 | 12 |
| no. holes sealed after extraction | 10 | 10 | 8 | 11 | 10 | 9 |
| % sealing | 83 | 83 | 67 | 92 | 83 | 75 |

| | | | | | | |
|---|---|---|---|---|---|---|
| Comparative C1: film PA + sealant + no noise reducer, WO2011064698; Invention INV3: film PA + sealant + perforated closed macrocell PE noise reducing material. | | | | | | |

As can be seen from the data shown in Table 7, in particular by comparing the sealing results of the comparative sample C2 - characterised by the presence of conventional open microcell polyurethane material - with respect to those of sample C1 without noise reducing materials - the sealing performance deteriorates drastically when the noise reducing material consists of conventional polyurethane materials, such as not to allow its application in commercial products.

Conversely, the macrocell polyethylene noise reducing materials of the tyre according to the invention (Table 8, sample INV3) have sealing values that are only slightly lower than the significant ones obtained with the conventional sealing system (comparative C1) and more than satisfactory for the manufacture of soundproof self-sealing tyres of a commercial interest.

The Applicant supposes that the soundproofing noise reducing material used in sample INV3, unlike the open microcells polyurethane material of the comparative sample C2, although dragged in the perforation by the sealing composition, does not form a network of micro channels that can be crossed by air, but rather act as a multi-laminar structure that within the hole becomes compact, thus obstructing the passage and effectively contributing to the sealing thereof.

In other words, the noise reducing material of sample INV3, both for the mechanical properties of the polymer and for closed-cell cellular structure of the noise reducing material is much more rigid and less friable than conventional open microcell polyurethane noise reducing materials, and therefore would tend not to crumble and cooperate with the sealing elastomeric composition in the sealing.

## Claims

1. Soundproof self-sealing tyre for vehicle wheels comprising:
- a carcass structure;
- a tread band in a radially outer position with respect to said carcass structure;
- a layer of airtight elastomeric material (liner), applied in a radially inner position with respect to the carcass structure;
- a layer of sealing elastomeric composition applied on at least a portion of the radially inner surface of the layer of airtight elastomeric material and extending axially at least at a part of the tread band;
- optionally, a self-supporting film, applied on at least a portion of the radially inner surface of the layer of sealing composition;
- a noise reducing element applied on at least a portion of the radially inner surface of the layer of sealing elastomeric composition or, if present, of the self-supporting film,
wherein said noise reducing element comprises at least one closed-cell foamed polyolefin material, preferably with closed macrocells.

2. Tyre according to claim 1, wherein said sealing elastomeric composition comprises
(a) at least one unsaturated styrenic thermoplastic elastomer, and/or
(b) at least one diene elastomer;
(c) optionally at least one crosslinking agent;
(d) at least one tackifying resin,
(e) optionally at least one plasticizer,
(f) optionally at least one reinforcing filler
(g) optionally at least one homogenizing agent, and
(h) optionally at least one peptizer agent.

3. Tyre according to any one of the preceding claims, wherein the sealing elastomeric composition comprises:
(a) 20 phr to 100 phr of at least one unsaturated styrene thermoplastic elastomer,
(b) 0 to 80 phr of at least one natural or synthetic diene elastomer,
(c) 0.1 to 6 phr of at least one crosslinking agent,
(d) 20 to 200 phr, preferably 30 phr to 150 phr, of at least one tackifying resin, and optionally
(e) 10 to 200 phr, preferably 20 to 60 phr, of a plasticizer, and
(f) 1 to 40 phr, preferably 5 to 30 phr, of at least one reinforcing filler; or
(b) 55 to 95 phr of one or more natural or synthetic diene elastomers,
(b') 5 to 45 phr of one or more pre-crosslinked elastomers,
(d) 5 to 50 phr of at least one tackifying resin, and
(f) 1 to 40 phr of at least one reinforcing filler.

4. Tyre according to any one of the preceding claims, wherein the layer of sealing elastomeric composition has a thickness greater than 1.5 mm, preferably greater than 2 mm and/or less than 5 mm, preferably less than 4 mm.

5. Tyre according to any one of the preceding claims, wherein the self-supporting film is present and is a thermoplastic film comprising one or more polyamides, or one or more polyolefins.

6. Tyre according to any one of the preceding claims, wherein said foamed polyolefin material comprises closed macrocells having an average size of at least 1.5 mm, more preferably at least 3 mm, even more preferably at least 4 mm according to ASTM D3576.

7. Tyre according to any one of the preceding claims, wherein said foamed polyolefin material has closed macrocells and comprises a number of cells in 25 mm less than 30, preferably less than 20, more preferably less than 10, measured according to the method BS 4443/1 Met.4.

8. Tyre according to any one of the preceding claims, wherein said foamed polyolefin material with closed cells is obtained by foaming of a polyolefin material selected from ethylene, propylene, C4-C20 alpha-olefin homo- and copolymers or mixtures thereof, preferably from ethylene homo- and copolymers or mixtures thereof, preferably said polyolefin material is a low density polyethylene (LDPE), with a density equal to or less than 0.940 g/cm3, preferably with a density of between 0.910 - 0.940 g/cm³.

9. Tyre according to any one of the preceding claims, wherein the foamed polyolefin material has a density not greater than 40 Kg/m3, preferably not greater than 30 Kg/m3, more preferably not greater than 25 Kg/m3.

10. Tyre according to any one of the preceding claims, wherein said foamed polyolefin material with closed cells, preferably with closed macrocells, comprises
- at least one perforation, preferably at least 5, at least 10, at least 20, at least 30 perforations per 10 cm² of the surface of the material itself; and/or
- at least 10%, preferably at least 20%, more preferably at least 25% of cells opened by the perforation.

11. Tyre according to claim 10, wherein the perforations of the perforated foamed polyolefin material have an average width greater than 0.01 mm, preferably greater than 0.1 mm, preferably greater than 0.5 mm.

12. Tyre according to any one of the preceding claims, wherein the thickness of the foamed polyolefin material is at least 5 mm, preferably from 5 to 50 mm, more preferably from 7 to 40 mm, even more preferably from 10 to 30 mm.

13. Process for manufacturing a soundproofed self-sealing tyre for vehicle wheels comprising:
i) providing a vulcanized and moulded tyre, wherein said tyre comprises at least:
- a carcass structure;
- a tread band in a radially outer position with respect to said carcass structure;
- a layer of airtight elastomeric material, applied in a radially inner position with respect to the carcass structure;
ii) applying a layer of sealing elastomeric composition on at least a portion of the radially inner surface of the layer of airtight elastomeric material extending axially at least at a part of the tread band and optionally, a self-supporting film on the radially inner surface of the layer of sealing composition, so as to provide a self-sealing tyre;
iii) providing a noise reducing element comprising a closed-cell foamed polyolefin material, preferably with closed macrocells, optionally perforated;
iv) optionally cleaning at least one portion of the radially inner surface of the optional self-supporting film of said self-sealing tyre;
v) optionally applying an adhesive on the at least a portion, optionally cleaned, of the radially inner surface of the optional self-supporting film of the tyre and/or on the afterwards radially outer surface of said noise reducing element;
vi) making the optionally tackified surface of said noise reducing element adhere to at least a portion of the radially inner surface of the layer of elastomeric sealing composition or, if present, on at least a portion, optionally cleaned and tackified, of the radially inner surface of the self-supporting film, so as to provide a soundproofed self-sealing tyre.

14. Process for manufacturing a soundproofed self-sealing tyre for vehicle wheels comprising:
i) providing a vulcanized and moulded self-sealing tyre, wherein said tyre comprises at least:
- a carcass structure;
- a tread band in a radially outer position with respect to said carcass structure;
- a layer of airtight elastomeric material, applied in a radially inner position with respect to the carcass structure;
- a layer of sealing elastomeric composition applied on at least a portion of the radially inner surface of the layer of airtight elastomeric material extending axially at least at a part of the tread band;
- a self-supporting film, applied on the radially inner surface of the layer of sealing composition;
iii) providing a noise reducing element comprising a closed-cell foamed polyolefin material, preferably with closed macrocells, optionally perforated;
iv) optionally cleaning at least one portion of the radially inner surface of the self-supporting film of said tyre or removing the film;
v) optionally applying an adhesive on the at least a portion, optionally cleaned, of the radially inner surface of the self-supporting film, if present, and/or on the afterwards radially outer surface of said noise reducing element;
vi) making the optionally tackified surface of said noise reducing element adhere to the at least a portion, optionally cleaned and tackified, of the radially inner surface of the self-supporting film, if present, or if the film has been removed, directly to the layer of elastomeric sealing composition so as to provide a soundproofed self-sealing tyre.

## Patentansprüche

1. Selbstdichtender Schallschutzreifen für Fahrzeugräder, umfassend:
- eine Karkassenstruktur;
- einen Laufflächenring in einer radial äußeren Position in Bezug auf die Karkassenstruktur;
- eine Lage aus luftdichtem Elastomermaterial (Mantel), die in einer radial inneren Position in Bezug auf die Karkassenstruktur angelegt ist;
- eine Lage aus einer dichtenden Elastomerzusammensetzung, die auf zumindest einen Abschnitt der radial inneren Oberfläche der Lage aus luftdichtem Elastomermaterial aufgebracht ist und sich axial zumindest an einem Teil des Laufflächenrings erstreckt;
- optional eine selbsttragende Folie, die auf zumindest einen Abschnitt der radial inneren Oberfläche der Lage aus der dichtenden Zusammensetzung aufgebracht ist;
- ein geräuschverringerndes Element, das auf zumindest einen Abschnitt der radial inneren Oberfläche der Lage aus der dichtenden Elastomerzusammensetzung oder, sofern vorhanden, der selbsttragenden Folie aufgebracht ist,
wobei das geräuschverringernde Element zumindest ein geschäumtes Polyolefinmaterial mit geschlossenen Zellen umfasst, vorzugsweise mit geschlossenen Makrozellen.

2. Reifen nach Anspruch 1, wobei die dichtende Elastomerzusammensetzung umfasst
(a) zumindest ein thermoplastisches ungesättigtes Styrol-Elastomer, und/oder
(b) zumindest ein Dien-Elastomer;
(c) optional zumindest ein Vernetzungsmittel;
(d) zumindest ein klebrigmachendes Harz,
(e) optional zumindest einen Weichmacher,
(f) optional zumindest einen verstärkenden Füllstoff,
(g) optional zumindest einen Homogenisator, und
(h) optional zumindest einen Peptisator.

3. Reifen nach einem der vorhergehenden Ansprüche, wobei die dichtende Elastomerzusammensetzung umfasst:
(a) 20 phr bis 100 phr zumindest eines thermoplastischen ungesättigten Styrol-Elastomers,
(b) 0 bis 80 phr zumindest eines natürlichen oder synthetischen Dien-Elastomers,
(c) 0,1 bis 6 phr zumindest eines Vernetzungsmittels,
(d) 20 bis 200 phr, vorzugsweise 30 phr bis 150 phr zumindest eines klebrigmachenden Harzes, und optional
(e) 10 bis 200 phr vorzugsweise 20 bis 60 phr eines Weichmachers, und
(f) 1 bis 40 phr, vorzugsweise 5 bis 30 phr zumindest eines verstärkenden Füllstoffs; oder
(b) 55 bis 95 phr eines oder mehrerer natürlicher oder synthetischer Dien-Elastomere,
(b') 5 bis 45 phr eines oder mehrerer vorvernetzter Elastomere,
(d) 5 bis 50 phr zumindest eines klebrigmachenden Harzes, und
(f) 1 bis 40 phr zumindest eines verstärkenden Füllstoffs.

4. Reifen nach einem der vorhergehenden Ansprüche, wobei die Lage der dichtenden Elastomerzusammensetzung eine Dicke von mehr als 1,5 mm, vorzugsweise mehr als 2 mm und/oder weniger als 5 mm, vorzugsweise weniger als 4 mm aufweist.

5. Reifen nach einem der vorhergehenden Ansprüche, wobei die selbsttragende Folie vorliegt und eine thermoplastische Folie umfassend ein oder mehrere Polyamide oder ein oder mehrere Polyolefine ist.

6. Reifen nach einem der vorhergehenden Ansprüche, wobei das geschäumte Polyolefinmaterial geschlossene Makrozellen umfasst, die eine mittlere Größe von zumindest 1,5 mm, noch bevorzugter zumindest 3 mm, sogar noch bevorzugter zumindest 4 mm gemäß ASTM D3576 aufweisen.

7. Reifen nach einem der vorhergehenden Ansprüche, wobei das geschäumte Polyolefinmaterial geschlossene Makrzozellen aufweist und eine Anzahl von Zellen in 25 mm von weniger als 30, vorzugsweise weniger als 20, noch bevorzugter weniger als 10 aufweist, jeweils gemessen gemäß dem Verfahren BS 4443/1 Met.4.

8. Reifen nach einem der vorhergehenden Ansprüche, wobei das geschäumte Polyolefinmaterial mit geschlossenen Zellen durch Schäumen eines Polyolefinmaterials erhalten wird, das ausgewählt ist aus Ethylen, Propylen, C4-C20-alpha-Olefin-Homo- und Copolymeren oder Mischungen davon, vorzugsweise aus Ethylen-Homo- und Copolymeren oder Mischungen davon, wobei das Polyolefinmaterial vorzugsweise ein Polyethylen niedriger Dichte ist (LDPE), mit einer Dichte gleich oder kleiner als 0,940 g/cm³, vorzugsweise mit einer Dichte zwischen 0,910 - 0,940 g/cm³.

9. Reifen nach einem der vorhergehenden Ansprüche, wobei das geschäumte Polyolefinmaterial eine Dichte von nicht mehr als 40 kg/m³, vorzugsweise nicht mehr als 30 kg/m³, noch bevorzugter nicht mehr als 25 kg/m³ ist.

10. Reifen nach einem der vorhergehenden Ansprüche, wobei das geschäumte Polyolefinmaterial mit geschlossenen Zellen, vorzugsweise mit geschlossenen Makrozellen, umfasst
- zumindest eine Perforation, vorzugsweise zumindest 5, zumindest 10, zumindest 20, zumindest 30 Perforationen pro 10 cm² der Oberfläche des Materials selbst; und/oder
- zumindest 10 %, vorzugsweise zumindest 20 %, noch bevorzugter zumindest 25 % der Zellen durch die Perforation geöffnet sind.

11. Reifen nach Anspruch 10, wobei die Perforationen des perforierten geschäumten Polyolefinmaterials eine mittlere Breite größer als 0,01 mm, vorzugsweise größer als 0,1 mm, vorzugsweise größer als 0,5 mm aufweisen.

12. Reifen nach einem der vorhergehenden Ansprüche, wobei die Dicke des geschäumten Polyolefinmaterials zumindest 5 mm, vorzugsweise von 5 bis 50 mm, noch bevorzugter von 7 bis 40 mm, sogar noch bevorzugter von 10 bis 30 mm beträgt.

13. Verfahren zur Herstellung eines selbstdichtenden Schallschutzreifens für Fahrzeugräder, wobei das Verfahren umfasst:
i) Bereitstellen eines vulkanisierten und geformten Reifens, wobei der Reifen zumindest umfasst:
- eine Karkassenstruktur;
- einen Laufflächenring, der in Bezug auf die Karkassenstruktur in einer radial äußeren Position angelegt ist;
- eine Lage aus luftdichtem Elastomermaterial, die in einer radial inneren Position in Bezug auf die Karkassenstruktur angelegt ist;
ii) Aufbringen einer Lage einer dichtenden Elastomerzusammensetzung auf zumindest einen Abschnitt der radial inneren Oberfläche der Lage aus luftdichtem Elastomermaterial, die sich axial zumindest an einem Teil des Laufflächenrings erstreckt, und optional einer selbsttragenden Folie auf die radial innere Oberfläche der Lage der dichtenden Zusammensetzung, um einen selbstdichtenden Reifen bereitzustellen;
iii) Bereitstellen eines geräuschverringernden Elements umfassend ein geschäumtes Polyolefinmaterial mit geschlossenen Zellen, vorzugsweise mit geschlossenen Makrozellen, die optional perforiert sind;
iv) optionales Reinigen zumindest eines Abschnitts der radial inneren Oberfläche der optionalen selbsttragenden Folie des selbstdichtenden Reifens;
v) optionales Auftragen eines Klebstoffs auf den zumindest einen optional gereinigten Abschnitt der radial inneren Oberfläche der optionalen selbsttragenden Folie des Reifens und/oder auf die danach radial äußere Oberfläche des geräuschverringernden Elements;
vi) Anhaftenlassen der optional klebrig gemachten Oberfläche des geräuschverringernden Elements an zumindest einem Abschnitt der radial inneren Oberfläche der Lage der dichtenden elastomeren Zusammensetzung oder, sofern vorhanden, an zumindest einem optional gereinigten und klebrig gemachten Abschnitt der radial inneren Oberfläche der selbsttragenden Folie, um einen mit Schallschutz versehenen selbstdichtenden Reifen bereitzustellen.

14. Verfahren zur Herstellung eines selbstdichtenden Schallschutzreifens für Fahrzeugräder, wobei das Verfahren umfasst:
i) Bereitstellen eines vulkanisierten und geformten selbsttdichtenden Reifens, wobei der Reifen zumindest umfasst:
- eine Karkassenstruktur;
- einen Laufflächenring, der in Bezug auf die Karkassenstruktur in einer radial äußeren Position angelegt ist;
- eine Lage aus luftdichtem Elastomermaterial, die in einer radial inneren Position in Bezug auf die Karkassenstruktur angelegt ist;
- eine Lage aus einer dichtenden Elastomerzusammensetzung, die auf zumindest einen Abschnitt der radial inneren Oberfläche der Lage aus luftdichtem Elastomermaterial aufgebracht ist und sich axial zumindest an einem Teil des Laufflächenrings erstreckt;
- eine selbsttragende Folie, die auf die radial innere Oberfläche der Lage der dichtenden Zusammensetzung aufgebracht ist;
iii) Bereitstellen eines geräuschverringernden Elements umfassend ein geschäumtes Polyolefinmaterial mit geschlossenen Zellen, vorzugsweise mit geschlossenen Makrozellen, die optional perforiert sind;
iv) optionales Reinigen zumindest eines Abschnitts der radial inneren Oberfläche der selbsttragenden Folie des Reifens, oder Entfernen der Folie;
v) optionales Auftragen eines Klebstoffs auf den zumindest einen optional gereinigten Abschnitt der radial inneren Oberfläche der selbsttragenden Folie, sofern vorhanden, und/oder auf die danach radial äußere Oberfläche des geräuschverringernden Elements;
vi) Anhaftenlassen der optional klebrig gemachten Oberfläche des geräuschverringernden Elements an dem optional gereinigten und klebrig gemachten Abschnitt der radial inneren Oberfläche der selbsttragenden Folie, sofern diese vorhanden ist, oder, wenn die Folie entfernt worden ist, direkt auf die Lage der dichtenden elastomeren Zusammensetzung, um einen mit Schallschutz versehenen selbstdichtenden Reifen bereitzustellen.

## Revendications

1. Pneu auto-obturant insonorisé pour roues de véhicule comprenant :
- une structure de carcasse ;
- une bande de roulement dans une position radialement externe par rapport à ladite structure de carcasse ;
- une couche de matériau élastomère étanche à l'air (calandrage intérieur), appliquée dans une position radialement interne par rapport à la structure de carcasse ;
- une couche de composition élastomère d'étanchéité appliquée sur au moins une partie de la surface radialement interne de la couche de matériau élastomère étanche à l'air et s'étendant axialement au moins au niveau d'une partie de la bande de roulement ;
- éventuellement, un film autoportant, appliqué sur au moins une partie de la surface radialement interne de la couche de composition d'étanchéité ;
- un élément réducteur de bruit appliqué sur au moins une partie de la surface radialement interne de la couche de composition élastomère d'étanchéité ou, le cas échéant, du film autoportant,
dans lequel ledit élément réducteur de bruit comprend au moins un matériau polyoléfinique en mousse à alvéoles fermés, de préférence à macro-alvéoles fermés.

2. Pneu selon la revendication 1, dans lequel ladite composition élastomère d'étanchéité comprend
(a) au moins un élastomère thermoplastique styrénique insaturé, et/ou
(b) au moins un élastomère diénique ;
(c) éventuellement au moins un agent de réticulation ;
(d) au moins une résine donnant du collant,
(e) éventuellement au moins un plastifiant,
(f) éventuellement au moins une charge renforçante
(g) éventuellement au moins un agent d'homogénéisation, et
(h) éventuellement au moins un agent peptisant.

3. Pneu selon l'une quelconque des revendications précédentes, dans lequel la composition élastomère d'étanchéité comprend :
(a) 20 phr à 100 phr d'au moins un élastomère thermoplastique styrénique insaturé,
(b) 0 à 80 phr d'au moins un élastomère diénique naturel ou synthétique,
(c) 0,1 à 6 phr d'au moins un agent de réticulation,
(d) 20 à 200 phr, de préférence 30 phr à 150 phr, d'au moins une résine donnant du collant, et éventuellement
(e) 10 à 200 phr, de préférence 20 à 60 phr, d'un plastifiant, et
(f) 1 à 40 phr, de préférence 5 à 30 phr, d'au moins une charge renforçante ; ou
(b) 55 à 95 phr d'un ou de plusieurs élastomère(s) diénique(s) naturel(s) ou synthétique(s),
(b') 5 à 45 phr d'un ou de plusieurs élastomère(s) pré-réticulé(s),
(d) 5 à 50 phr d'au moins une résine donnant du collant, et
(f) 1 à 40 phr d'au moins une charge renforçante.

4. Pneu selon l'une quelconque des revendications précédentes, dans lequel la couche de composition élastomère d'étanchéité a une épaisseur supérieure à 1,5 mm, de préférence supérieure à 2 mm et/ou inférieure à 5 mm, de préférence inférieure à 4 mm.

5. Pneu selon l'une quelconque des revendications précédentes, dans lequel le film autoportant est présent et est un film thermoplastique comprenant un ou plusieurs polyamide(s) ou une ou plusieurs polyoléfine(s).

6. Pneu selon l'une quelconque des revendications précédentes, dans lequel ledit matériau polyoléfinique en mousse comprend des macro-alvéoles fermés ayant une taille moyenne d'au moins 1,5 mm, plus préférablement d'au moins 3 mm, encore plus préférablement d'au moins 4 mm selon la norme ASTM D3576.

7. Pneu selon l'une quelconque des revendications précédentes, dans lequel ledit matériau polyoléfinique en mousse présente des macro-alvéoles fermés et comprend un nombre d'alvéoles en 25 mm inférieur à 30, de préférence inférieur à 20, plus préférablement inférieur à 10, mesuré selon la méthode BS 4443/1 Met.4.

8. Pneu selon l'une quelconque des revendications précédentes, dans lequel ledit matériau polyoléfinique en mousse à alvéoles fermés est obtenu par moussage d'un matériau polyoléfinique choisi parmi des homo- et copolymères d'éthylène, de propylène, d'alpha-oléfine en C4 à C20 ou leurs mélanges, de préférence parmi des homo- et copolymères d'éthylène ou leurs mélanges, de préférence ledit matériau polyoléfinique est un polyéthylène basse densité (LDPE), ayant une densité inférieure ou égale à 0,940 g/cm³, de préférence ayant une densité comprise entre 0,910 et 0,940 g/cm³.

9. Pneu selon l'une quelconque des revendications précédentes, dans lequel le matériau polyoléfinique en mousse a une densité non supérieure à 40 Kg/m3, de préférence non supérieure à 30 Kg/m3, plus préférablement non supérieure à 25 Kg/m3.

10. Pneu selon l'une quelconque des revendications précédentes, dans lequel ledit matériau polyoléfinique en mousse à alvéoles fermés, de préférence à macro-alvéoles fermés, comprend
- au moins une perforation, de préférence au moins 5, au moins 10, au moins 20, au moins 30 perforations par 10 cm² de la surface du matériau lui-même ; et/ou
- au moins 10%, de préférence au moins 20%, plus préférablement au moins 25% d'alvéoles ouverts par la perforation.

11. Pneu selon la revendication 10, dans lequel les perforations du matériau polyoléfinique en mousse perforé ont une largeur moyenne supérieure à 0,01 mm, de préférence supérieure à 0,1 mm, de préférence supérieure à 0,5 mm.

12. Pneu selon l'une quelconque des revendications précédentes, dans lequel l'épaisseur du matériau polyoléfinique en mousse est d'au moins 5 mm, de préférence de 5 à 50 mm, plus préférablement de 7 à 40 mm, encore plus préférablement de 10 à 30 mm.

13. Procédé de fabrication d'un pneu auto-obturant insonorisé pour roues de véhicule comprenant le fait :
i) de fournir un pneu vulcanisé et moulé, où ledit pneu comprend au moins :
- une structure de carcasse ;
- une bande de roulement dans une position radialement externe par rapport à ladite structure de carcasse ;
- une couche de matériau élastomère étanche à l'air, appliquée dans une position radialement interne par rapport à la structure de carcasse ;
ii) d'appliquer une couche de composition élastomère d'étanchéité sur au moins une partie de la surface radialement interne de la couche de matériau élastomère étanche à l'air s'étendant axialement au moins au niveau d'une partie de la bande de roulement et éventuellement, un film autoportant sur la surface radialement interne de la couche de composition d'étanchéité, de manière à obtenir un pneu auto-obturant ;
iii) de fournir un élément réducteur de bruit comprenant un matériau polyoléfinique en mousse à alvéoles fermés, de préférence à macro-alvéoles fermés, éventuellement perforé ;
iv) éventuellement de nettoyer au moins une partie de la surface radialement interne du film autoportant facultatif dudit pneu auto-obturant ;
v) éventuellement d'appliquer un adhésif sur l'au moins une partie, éventuellement nettoyée, de la surface radialement interne du film autoportant facultatif du pneu et/ou sur la surface radialement externe suivante dudit élément réducteur de bruit ;
vi) de faire adhérer la surface éventuellement rendue collante dudit élément réducteur de bruit à au moins une partie de la surface radialement interne de la couche de composition d'étanchéité élastomère ou, le cas échéant, sur au moins une partie, éventuellement nettoyée et rendue collante, de la surface radialement interne du film autoportant, de manière à obtenir un pneu auto-obturant insonorisé.

14. Procédé de fabrication d'un pneu auto-obturant insonorisé pour roues de véhicule comprenant le fait :
i) de fournir un pneu auto-obturant vulcanisé et moulé, où ledit pneu comprend au moins :
- une structure de carcasse ;
- une bande de roulement dans une position radialement externe par rapport à ladite structure de carcasse ;
- une couche de matériau élastomère étanche à l'air, appliquée dans une position radialement interne par rapport à la structure de carcasse ;
- une couche de composition élastomère d'étanchéité appliquée sur au moins une partie de la surface radialement interne de la couche de matériau élastomère étanche à l'air s'étendant axialement au moins au niveau d'une partie de la bande de roulement ;
- un film autoportant, appliqué sur la surface radialement interne de la couche de composition d'étanchéité ;
iii) de fournir un élément réducteur de bruit comprenant un matériau polyoléfinique en mousse à alvéoles fermés, de préférence à macro-alvéoles fermés, éventuellement perforé ;
iv) éventuellement de nettoyer au moins une partie de la surface radialement interne du film autoportant dudit pneu ou de retirer le film ;
v) éventuellement d'appliquer un adhésif sur l'au moins une partie, éventuellement nettoyée, de la surface radialement interne du film autoportant, le cas échéant, et/ou sur la surface radialement externe suivante dudit élément réducteur de bruit ;
vi) de faire adhérer la surface éventuellement rendue collante dudit élément réducteur de bruit à l'au moins une partie, éventuellement nettoyée et rendue collante, de la surface radialement interne du film autoportant, le cas échéant, ou si le film a été retiré, directement à la couche de composition d'étanchéité élastomère de manière à obtenir un pneu auto-obturant insonorisé.
